# EUROPEAN PATENT SPECIFICATION

(11) **EP 4 588 013 B1**
(45) Date of publication and mention of the grant of the patent: **09.12.2026**
(21) Application number: 23768899.9
(22) Date of filing: 15.09.2023
(51) Int. Cl.: G06T 19/00, G06T 13/00, G06T 17/00

(54) **A SPARSE UNIFIED PART-BASED HUMAN REPRESENTATION (SUPR)**
SPÄRLICHE EINHEITLICHE TEILEBASIERTE MENSCHLICHE DARSTELLUNG (SUPR)
REPRÉSENTATION HUMAINE À BASE DE PARTIES UNIFIÉE ÉPARSE (SUPR)

(30) Priority: 16.09.2022 EP 22196130
(43) Date of publication of application: 23.07.2025
(73) Proprietor: Max-Planck-Gesellschaft zur Förderung der Wissenschaften e.V., 80539 München (DE)
(72) Inventor: OSMAN, Ahmed A. A., 72076 Tübingen (DE); BLACK, Michael J., 72076 Tübingen (DE); BOLKART, Timo, 72076 Tübingen (DE); TZIONAS, Dimitrios, 72076 Tübingen (DE)
(74) Representative: Bach, Alexander
(86) International application number: PCT/EP2023/075491
(87) International publication number: WO 2024/056883

(56) References cited:
- OSMAN AHMED A A ET AL: "STAR: Sparse Trained Articulated Human Body Regressor", COMPUTER VISION - ECCV 2020 : 16TH EUROPEAN CONFERENCE, GLASGOW, UK, AUGUST 23-28, 2020, PROCEEDINGS, PART VI; [LECTURE NOTES IN COMPUTER SCIENCE], SPRINGER, CHAM, vol. 12351, 5 January 2021 (2021-01-05), pages 598 - 613, XP047568586, ISBN: 978-3-030-58538-9, [retrieved on 20201107], DOI: 10.1007/978-3-030-58539-6_36
- XU HONGYI ET AL: "GHUM & GHUML: Generative 3D Human Shape and Articulated Pose Models", 2020 IEEE/CVF CONFERENCE ON COMPUTER VISION AND PATTERN RECOGNITION (CVPR), IEEE, 13 June 2020 (2020-06-13), pages 6183 - 6192, XP033803472, DOI: 10.1109/CVPR42600.2020.00622
- WANG YUPAN 394013938@QQ COM ET AL: "PanoMan: Sparse Localized Components-based Model for Full Human Motions", ACM TRANSACTIONS ON GRAPHICS, ACM, NY, US, vol. 40, no. 2, 27 April 2021 (2021-04-27), pages 1 - 17, XP058683694, ISSN: 0730-0301, DOI: 10.1145/3447244
- ROMERO JAVIER JAVIER ROMERO@BODYLABS COM ET AL: "Embodied hands", ACM TRANSACTIONS ON GRAPHICS, ACM, NY, US, vol. 36, no. 6, 20 November 2017 (2017-11-20), pages 1 - 17, XP058473836, ISSN: 0730-0301, DOI: 10.1145/3130800.3130883
- JOO HANBYUL ET AL: "Total Capture: A 3D Deformation Model for Tracking Faces, Hands, and Bodies", 2018 IEEE/CVF CONFERENCE ON COMPUTER VISION AND PATTERN RECOGNITION, IEEE, 18 June 2018 (2018-06-18), pages 8320 - 8329, XP033473755, DOI: 10.1109/CVPR.2018.00868

## Description

The present invention relates to a method for generating a digital representation of a human body part, based on shape and pose parameters of a human body part model, a method for learning a model of a human body part and various models of body parts.

### TECHNICAL BACKGROUND

Generative 3D models of the human body and its parts play an important role in understanding human behavior. Over the past two decades, numerous 3D models of the body [1,2,3,4,5,6,7,8,9], face [10,11,12,13,14,15,16,17] and hands [18,19,20,21,22,23] have been proposed. Such models enabled a myriad of applications ranging from reconstructing bodies [24,25,26], faces [27,28,29], and hands [30,31] from images and videos, modeling human interactions [32], generating 3D clothed humans [33,34,35,36,37,38,39], or generating humans in scenes [40,41,42]. They are also used as priors for fitting models to a wide range of sensory input measurements like motion capture markers [43,44] or IMUs [45,46,47]. Hand [21,48,22,49], head [12,13,49] and body [6,7] models are typically built independently. OSMAN AHMED A A ET AL ("STAR: Sparse Trained Articulated Human Body Regressor", ECCV 2020, 5 January 2021) discloses a method for generating a digital representation of a human body structure based on shape and pose parameters of a parametric human model and utilizes an articulated mesh template, shape-dependent blend shapes, pose-dependent blend shapes, and a linear blend skinning (LBS) procedure to animate a mesh structure. However, this publication employs a monolithic, global architecture where a single unified mathematical function parameterizes the entire full-body mesh dynamically as an inseparable unit and lacks any structural factorization, making it impossible to decouple or extract individual body part models (such as an independent hand, head, or foot pipeline) to process localized data streams without executing the entire global regressor space.

### PRIOR ART

SCAPE [2] is the first 3D model to factor body shape into separate pose and a shape spaces. SCAPE is based on triangle deformations and is not compatible with existing graphics pipelines. In contrast, SMPL [6] is the first learned statistical body model compatible with game engines SMPL is a vertex-based model with linear blend skinning (LBS) and learned pose and shape corrective blendshapes. A key drawback of SMPL is that it relates the pose corrective blendshapes to the elements of the part rotations matrices of all the model joints in the kinematic tree. Consequently, it learns spurious long-range correlations in the training data. STAR [7] addresses many of the drawback of SMPL by using a compact representation of the kinematic tree based on quaternions and learning sparse pose corrective blendshapes where each joint strictly influences a sparse set of the model vertices. The *Stitched Puppet* [50] is a part-based model of the human body. The body is segmented into 16 independent parts with learned pose and shape corrective blendshapes. A pairwise stitching function fuses the parts, but leaves visible discontinuities. Most related to the models of the present invention are expressive body models such as Frank [51], SMPL-X [52], and GHUM & GHUML [49,53]. Frank [51] merges the body of SMPL [6] with the FaceWarehouse [12] face model and an artist-defined hand rig. Due to the fusion of different models learned in isolation, Frank looks unrealistic. SMPL-X [52] learns an expressive body model and fuses the MANO hand model [21] pose blendshapes and the FLAME head model [13] expression space. However, since

MANO and FLAME are learned in isolation of the body, they do not capture the full degrees of freedom of the head and hands. Thus, fusing the parameters results in artifacts at the boundaries. Xu et al. [49] propose GHUM & GHUML, which are trained on a federated dataset of 60K head, hand and body scans and use a fully connected neural network architecture to predict the pose deformation. The GHUM model cannot be separated into body parts as a result of the dense fully connected formulation that relates all the vertices to all the joints in the model kinematic tree.

There are many models of 3D head shape [54,55,56], shape and expression [10,11,12,14,15,16,17] or shape, pose and expression [13]. The FLAME head model [13], like SMPL, uses a dense pose corrective blendshape formulation that relates all vertices to all joints. Xu et al. [49] also propose GHUM-Head, where the template is based on the GHUM head with a retrained pose dependent corrector network (PSD). Both GHUM-Head and FLAME are trained in isolation of the body and do not have sufficient joints to model the full head degrees of freedom.

MANO [21] is widely use and is based on the SMPL formulation where the pose corrective blendshapes deformations are regularized to be local. The kinematic tree of MANO is based on spherical joints allowing redundant degrees of freedom for the fingers. Xu et al. [49] introduce the GHUM-Hand model where they separate the hands from the template mesh of GHUM and train a hand-specific pose-dependent corrector network (PSD). Both MANO and GHUM-Hand are trained in isolation of the body and result in implausible deformation around the wrist area.

Statistical shape models of the feet are less studied than those of the body, head, and hands. Conard et al. [57] propose a statistical shape model of the human foot, which is a PCA space learned from static foot scans. However, the human feet deform with motion and models learned from static scans cannot capture the complexity of 3D foot deformations. To address the limitations of static scans, Boppana et al. [58] propose the DynaMo system to capture scans of the feet in motion and learn a PCA-based model from the scans. However, the DynaMo setup fails to capture the sole of the foot in motion.

In summary, heads and hands are captured with a 3D scanner in which a subject remains static, while the face and hands are articulated. This data is unnatural as it does not capture how the body parts move together with the body. As a consequence, the construction of head/hand models implicitly assumes a static body, and use a simple kinematic tree that fails to model the head/hand full degrees of freedom. This is a systematic limitation of existing head/hand models, which cannot be addressed by simply training on more data.

Another significant limitation of existing body-part models is the lack of an articulated foot model. This is surprising given the many applications of a 3D foot model in the design, sale, and animation of footwear. Feet are also critical for human locomotion. Any biomechanical or physics-based model must have realistic feet to be faithful. The feet on existing full body models like SMPL are overly simplistic, have limited articulation, and do not deform with contact.

### OBJECT OF THE INVENTION

It is therefore an object of the invention to provide more efficient and natural methods for representing and animating human body parts, the human head, hands and feet in particular.

### SUMMARY OF THE INVENTION

The object is achieved by a method according to the appended independent claims. Advantageous embodiments are defined in the dependent claims.

According to a first aspect, the invention provides a method for generating a digital representation of a human body part, based on shape and pose parameters of a human body part model, the method comprising the steps of: obtaining a template shape of the human body part, the template shape comprising vertices; adding a shape-dependent blend shape to vertices of the template shape, based on the shape parameters; adding a pose-dependent blend shape of the human body part model to vertices of the template shape, based on the pose parameters, applying a blend skinning procedure to the resulting template shape in order to obtain a posed shape; and outputting or storing the digital representation, based on the posed shape, wherein the human body part model has been machine-learned jointly with a full human body model. The pose parameters may correspond to the individual bone rotations around a given joint of the human body part model. The shape parameters may correspond to a subject identity. The method may further comprise the step of adding expression dependent blend shapes to vertices of the template shape, based on expression parameters. The expression parameters may control facial expressions. The blend skinning procedure may be a linear blend skinning procedure. The human body part may be a human head. The human body part may be a human hand. The human body part may be a human foot. The human body part model may be automatically separated from a full human body model. The human body part model may include joints of the full human body model that are not joints of the human body part. The human body part model may be a human foot model and may deform as a function of pose, shape and ground contact. The human body part model may be a human foot model and may include a foot deformation network. The human body part model has been machine-learned jointly with a full human body model, based on a federated dataset of full body and body part scans, in particular hand, head and/or foot scans. The full human body model may be separable into human body part models. The full human body model may be a sparse model. The pose blend shapes of the full human body model may be sparse. Each joint of the full human body model may only influence a proper subset of the template vertices.

The method according to the first aspect may be applied biomechanics, animation, and the footwear industry, in particular for reconstructing bodies, faces, and hands from images and videos, modeling human interactions, generating 3D clothed humans, or generating humans in scenes, and further to generate priors for fitting models to a wide range of sensory input measurements like motion capture markers or IMUs.

In summary, the main contributions of the invention are: (1) A unified framework for learning both expressive body models and a suite of high-fidelity body part models. (2) A novel 3D articulated foot model that captures compression due to contact. (3) A sparse expressive and compact body model that generalizes better than existing expressive human body models. (4) An entire suite of body part models for the head, hand and feet, where the model kinematic tree and pose deformation are learned instead of being artist defined.

The pose-corrective blendshapes of SUPR and the separated body part models are linearly related to the kinematic tree pose parameters, therefore the inventive model is fully compatible with existing animation and gaming industry standards. While the inventive model is also a part-based model, the inventive method starts with a unified model and learns its segmentation into parts during training from a federated training dataset. In contrast to the construction of Frank and SMPL-X, the invention starts with a coherent full body model, trained on a federated dataset of body, hand, head and feet scans, then separates the model into individual body parts. The factorized representation of the pose space deformations according to the invention enables seamless separation of the body into head/hand and foot models. In contrast to the previous methods, the head model according to the invention is trained jointly with the body on a federated dataset of head and body meshes, which is critical to model the head full range of motion. It also has more joints than GHUM-Head or FLAME, which is crucial to model the head full range of motion. The hand model according to the invention is trained jointly with the body and has a wrist joint which is critical to model the hands full range of motion. In contrast to all prior work, the foot model according to the invention comprises a kinematic tree, a pose deformation space, and a PCA shape space. A specialized 4D foot scanner is used for data acquisition, where the entire human foot is visible and accurately reconstructed, including the toes and the sole. Furthermore, the invention goes beyond previous work to model the foot deformations resulting from ground contact, which was not possible before.

### BRIEF DESCRIPTION OF THE FIGURES

- Fig. 1: shows a factorized representation of the human body according to an embodiment of the invention.
- Fig. 2: shows a kinematic tree of SUPR and the separated body part models according to an embodiment of the invention.
- Fig. 3: shows a constrained SUPR kinematic tree according to a further embodiment of the invention.
- Fig. 4: shows percentages of explained variance as a function of the number of shape components for SUPR and the separated body part models for a male (a) and female (b) shape space.
- Fig. 5: shows an overview of the scans captured by a full body scanner according to an embodiment of the invention.
- Fig. 6: shows a sample of the head captured by a head scanner according to an embodiment of the invention.
- Fig. 7: shows a sample of hand scans captured by a hand scanner according to an embodiment of the invention.
- Fig. 8: shows a sample of foot scans captured by a foot scanner according to an embodiment of the invention.
- Fig. 9: shows a foot scanner using 10 pairs of stereo according to an embodiment of the invention.
- Fig. 10: shows a comparison of reconstructed feet from a full body scanner and curated high resolution foot scans according to an embodiment of the invention.
- Fig. 11: shows a comparison between the scale of training datasets for recent human body models.
- Fig. 12: shows a qualitative evaluation of an embodiment of the invention. The 3DBodyTex dataset is used in Fig. 4a to evaluate GHUM, SMPL-X and SUPR in Fig. 4b using 16 shape components. SUPR-Head is evaluated against FLAME in Fig. 4c using 16 shape components and SUPR-Hand against MANO in Fig. 4d using 8 shape components.
- Fig. 13: shows a quantitative evaluation of SUPR-head (a), -hand (b), -foot (c) and -body (d) models according to an embodiment of the invention.
- Fig. 14: shows an evaluation of SUPR-foot against SMPL-X-foot.
- Fig. 15: shows an evaluation of SUPR-Foot on frames where the foot was not in contact with the glass platform (a) and frames where the foot was partially or fully in contact with the glass platform (b).
- Fig. 16: shows a dynamic evaluation of SUPR-Foot predicted deformations on a dynamic sequence where the subject leans backward and forward, effectively shifting their center of mass.

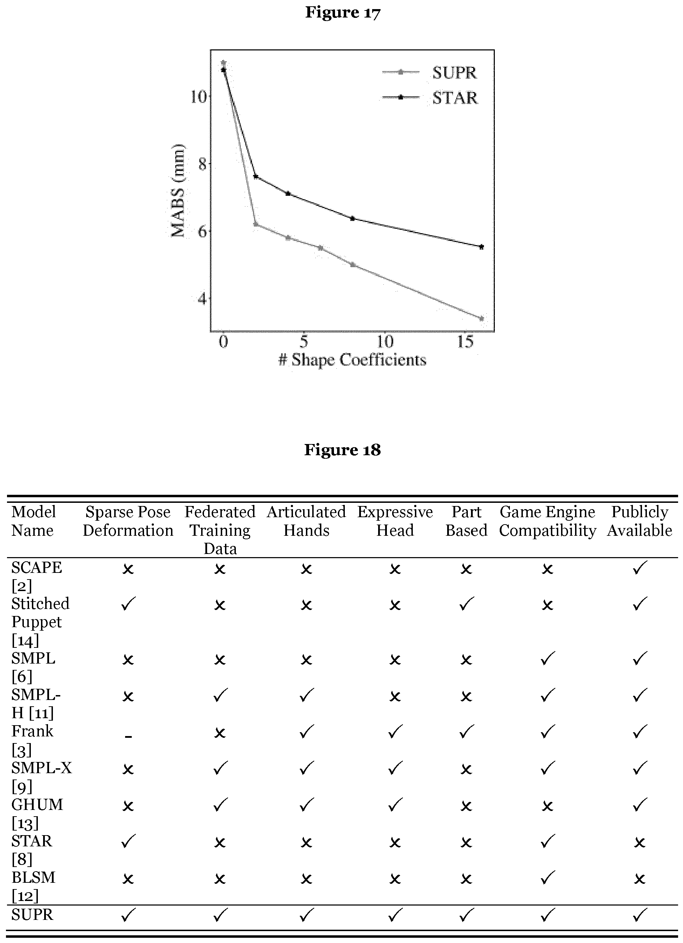

- Fig. 17: shows an evaluation of SUPR against STAR on the 3DBodyTex dataset.
- Fig. 18: shows a comparison between SUPR and existing body models.

### DETAILED EMBODIMENTS

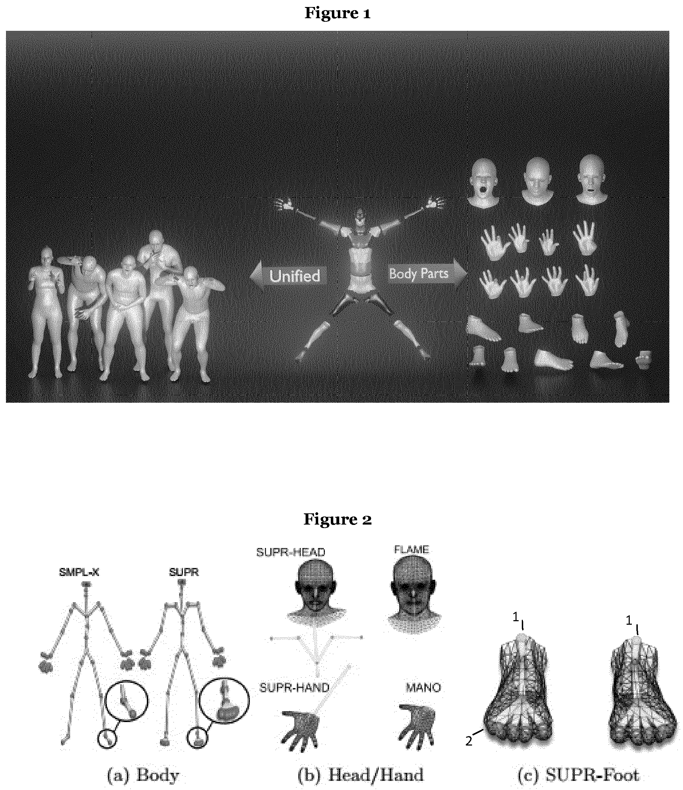

Figure 1 shows a factorized representation of the human body, generally referred to as SUPR (Sparse Unified Part-Based Representation) in the following, which can be separated into a full suite of body part models to provide a background context for the claimed method. In this framework, first, a full-body model is trained with articulated hands and an expressive head, using a federated dataset of body, hand, head and foot scans. This joint learning captures the full range of motion of the body parts along with the associated deformation. Then, given the learned deformations, the body model is separated into body part models to execute the method of generating a digital representation of a human body part according to claim 1.

To enable separating SUPR into compact individual body parts, a sparse factorization of the pose-corrective blend shape function is learned. The factored representation enables separating SUPR into an entire suite of models: SUPR-Head, SUPR-Hand and SUPR-Foot. A body part model is separated by considering all the joints that influence the set of vertices defined by the body part template mesh. The learned kinematic tree structure for the head/hand contains significantly more joints than commonly used by head/hand models. In contrast to the existing body part models that are learned in isolation of the body, the inventive training algorithm unifies many disparate prior efforts and results in a suite of models that can capture the full range of motion of the head, hands, and feet.

SUPR goes beyond existing statistical body models to include a novel foot model. To do so, the standard kinematic tree for the foot is extended to allow more degrees of freedom. To train the model, foot scans are captured using a custom 4D foot scanner, where the foot is visible from all views, including the sole of the foot which is imaged through a glass plate. This uniquely allows to capture how the foot is deformed by contact with the ground. This deformation is then modeled as a function of body pose and contact.

Generally, SUPR is a vertex-based 3D model with linear blend skinning (LBS) and learned blend shapes. The blend shapes are decomposed into 3 types: *Shape Blend Shapes* to capture the subject identity, *Pose-Corrective Blend Shapes* to correct for the widely-known LBS artifacts, and *Expression Blend Shapes* to model facial expressions.

Figure 2 shows the kinematic tree of SUPR and the separated body part models according to an embodiment of the invention. The SUPR mesh topology and cinematic tree are based on the SMPLX topology. The template mesh contains N = 10, 475 vertices and K = 75 joints. In contrast to existing body models, the SUPR kinematic tree contains significantly more joints in the foot, ankle and toes as shown in Figure 2a. In the present embodiment, SUPR-Foot contains an extensive kinematic tree with 13 joints per foot as shown in figure 2c.

Following the notation of SMPL, SUPR is defined by a function *M*(*θ̅, β̅, ψ̅*), where *̅θ̅*̅ ∈ 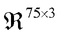 re the pose parameters corresponding to the individual bone rotations, *̅β̅*̅ ∈ 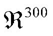 are the shape parameters corresponding to the subject identity, *̅ψ̅*̅ ∈ 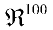 are the expression parameters controlling facial expressions. Formally, SUPR is defined as $M \left(\vec{θ}, \vec{β}, \vec{ψ}\right) = W \left({T}_{p}\left(\vec{θ}, \vec{β}, \vec{ψ}\right),J\left(\vec{β}\right),\vec{θ};WE\right) ,$ (1) where the 3D body, *Tₚ*(*θ̅, β̅, ψ̅*)*,* is transformed around the joints J by the linear-blend-skinning function W(.), parameterized by the skinning weights *WE* ∈ 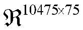 .

The cumulative corrective blend shapes term is defined as ${T}_{p} \left(\vec{θ}, \vec{β}, \vec{ψ}\right) = \overline{T} + {B}_{S} \left(\vec{β}; S\right) + {B}_{P} \left(\vec{θ}; P\right) + {B}_{E} \left(\vec{ψ}; E\right) ,$ (2) where *T̅* ∈ 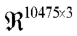 is the template of the mean body shape, which is deformed by: *B_{S}*(*β*; *S*), the shape blend shape function capturing a PCA space of body shapes; *B_{P}*(θ̅;*P*)*,* the pose-corrective blend shapes that address the LBS artifacts; and *B_{E}*(*̅ψ̅*̅;*E*), a PCA space of facial expressions.

In order to separate SUPR into body parts, each joint should strictly influence a subset of the template vertices *T̅.* To this end, the pose-corrective blend shapes *Bₚ*(.) in Eq. 2 are based on the STAR model [7]. The pose-corrective blend shape function is factored into per-joint pose corrective blend shape functions ${B}_{P} \left(\vec{q}, K, A\right) = {\sum }_{j = 1}^{K - 1} {B}_{P}^{j} \left({\vec{q}}_{ne \left(j\right)}; {K}_{j}; {A}_{j}\right) ,$ (3) where the pose-corrective blend shapes are sum of *K -* 1 sparse spatially-local pose-corrective blend-shape functions. Each joint-based corrective blend shape ${B}_{P}^{i} \left(.\right)$, predicts corrective offsets for a sparse set of the model vertices, defined by the learned joint activation weights *Aᵢ* ∈ 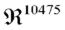 . Each *Aⱼ* is a sparse vector defining the sparse set of vertices influenced by the*j*^{th} joint blend shape ${B}_{P}^{j} \left(.\right)$. The joint corrective blend shape function is conditioned on the normalized unit quaternions *q̅ₙₑ*(*j*) of the *j*^{th} joint's direct neighboring joints' pose parameters.

The SUPR pose blend-shape formulation in Equation 3 is not conditioned on body shape, unlike STAR, since the additional body-shape blend shape is not sparse and, hence, cannot be factorized into body parts. Since the skinning weights in Eq. 1 and the pose-corrective blend-shape formulation in Equation 3 are sparse, each vertex in the model is related to a small subset of the model joints. This sparse formulation of the pose space is key to separating the model into compact body part models.

In traditional body part models like FLAME and MANO, the kinematic tree is designed by an artist and the models are learned in isolation of the body. In contrast, the pose-corrective blend shapes of the hand (SUPR-Hand), head (SUPR-Head) and foot (SUPR-Foot) models are trained jointly with the body on a federated dataset according to the method of claim 1. The kinematic tree of each part model is inferred from SUPR rather than being artist defined. To separate a body part, the subset of mesh vertices of the body part *T̅_{bp},* is first defined from the SUPR template *T̅_{bp}* ∈ *T̅.* Since the learned SUPR skinning weights and pose-corrective blend shapes are strictly sparse, any subset of the model vertices *T̅_{bp}* is strictly influenced by a subset of the model joints.

As an example configuration of automatic separation according to claim 7, a joint j is deemed to influence a body part defined by the template *T̅_{bp},* if: $I \left({T}_{bp}, \vec{j}\right) = \left\{\begin{matrix}1 if \sum W \left({\overline{T}}_{bp}, \vec{j}\right) \neq 0 & or \sum {A}_{j} \left({\overline{T}}_{bp}\right) \neq 0 \\ 0 & otherwise\end{matrix}\right.$ (4) where I(., .) is an indicator function, *W*(*T̅_{bp}, j̅*) *is* a subset of the SUPR learned skinning weights matrix, where the rows are defined by the vertices of *T̅_{bp},* the columns correspond to the*j*^{th} joint, *j̅, Aⱼ*(*T̅_{bp}*) corresponds to the learned activation for the *j*^{th} joint and the rows defined by vertices *T̅_{bp}*. The indicator function I returns 1 if a joint *̅j̅*̅ has non-zero skinning weights or a non-zero activation for the vertices defined by *T̅_{bp}.* Therefore the set of joints *J_{bp}* that influences the template *T̅_{bp}* is defined by: ${J}_{bp} = \left\{I\left({\overline{T}}_{bp}, j\right)=1∀j∈\left\{1,…,K\right\}\right\}$ (5)

The kinematic tree defined for the body part models in Eq. 5 is implicitly defined by the learned skinning weights *WE* and the per joint activation weights *Aⱼ.* The resulting kinematic tree of the separated models is shown in Fig. 2b. Surprisingly, the head is influenced by substantially more joints than in the artist-designed kinematic tree used in FLAME. Similarly, SUPR-Hand has an additional wrist joint compared to MANO. The additional joints in SUPR-Head and SUPR-Hand are outside the head/hand mesh. The additional joints for the head and the hand are beyond the scanning volume of a body part head/hand scanner. This means that it is not possible to learn the influence of the shoulder and spine joints on the neck from head scans alone.

The skinning weights for a separated body are defined by *W_{bp} = W*(*T̅_{bp}*, *J_{bp}*), where *W(T̅_{bp}*, *J_{bp}*) is the subset of the SUPR skinning weights defined by the rows corresponding to the vertices of *T̅_{bp}* and the columns defined by *J_{bp}*. Similarly, the pose corrective blendshapes are defined by *B_{bp} = Bₚ*(*T̅_{bp}, J_{bp}*) where *Bₚ =* (*T̅_{bp}*, *J_{bp}*) corresponds to a subset of SUPR pose blend shapes defined by the vertices of *T̅_{bp},* and the quaternion features for the set of joints *J_{bp}*. The skinning weights *W_{bp}* and blendshapes *B_{bp}* are based on the SUPR learned blend shapes and skinning weights, which are trained on a federated dataset that explores each body part's full range of motion relative to the body. Additionally, a joint regressor *J_{bp}*, is trained to regress the joints *J_{bp}* : *T̅_{bp}* → *J_{bp}*. A local body part shape space *Bₛ*(*β̅_{bp}*;*S_{bp}*) is learned, where *S_{bp}* is the body part PCA shape components. For the head, the SUPR learned expression space *B_{E}*(*ψ*; *E)* is used.

The linear pose-corrective blend shapes in Equation 2 and Equation 3 relate the body deformations to the body pose only. However, the human foot deforms as a function of pose, shape and ground contact. To model this, a foot deformation network is added.

The foot body part model, separated from SUPR, is defined by the pose parameters *θ̅_{bp}* ∈ *̅θ̅*̅, corresponding to the ankle and toe pose parameters in addition to *β̅_{bp}* , the PCA coefficients of the local foot shape space. The pose blend shapes in Equation 2 are extended to include a deep corrective deformation term for the foot vertices defined by *T̅_{foot}* ∈ *T̅*. With a slight abuse of notation, the deformation function *Tₚ*(*θ̅, β̅*, *̅ψ̅*̅) in Equation 2 will be referred to as *Tp* for simplicity. The foot deformation function is defined by: ${T}_{p}^{′} \left(\vec{θ}, \vec{β}, \vec{c}\right) = {T}_{p} + \vec{m} ∘ {B}_{F} \left({\vec{θ}}_{foot}, {\vec{β}}_{foot}, \vec{c}, F\right) ,$ (6) where *̅m̅*̅ ∈ {0,1}¹⁰⁴⁷⁵ is a binary vector with ones corresponding to the foot vertices and o elsewhere. *B_{F}*(.) is a multilayer perceptron-based deformation function parameterized by F, conditioned on the foot pose parameters *θ̅_{foot}*, foot shape parameters *β̅_{foof}* and foot contact state *̅c̅*̅. The foot contact state variable is a binary vector *̅c̅*̅ ∈ {0,1}²⁶⁶ defining the contact state of each vertex in the foot template mesh, a vertex is represented by a 1 if it is in contact with the ground, and o otherwise. The Hadamard product between *̅m̅*̅ and *B_{F}* (.) ensures the network *B_{F}* (.) strictly predicts deformations for the foot vertices only.

The foot contact deformation network is based on an encoder-decoder architecture. The input feature, *̅f̅*̅ ∈ *R*³²⁰ , to the encoder is a concatenated feature of the foot pose, shape and contact vector. The foot pose is represented with a normalized unit quaternion representation, shape is encoded with the first two PCA coefficients of the local foot shape space. The input feature *̅f̅*̅ is encoded into a latent vector *z̅* ∈ *R*¹⁶ using fully connected layers with a leaky LReLU as an activation function with a slope of 0.1 for negative values. The latent embedding *̅z̅*̅ is decoded to predict deformations for each vertex using fully connected layers with LReLU activation.

The raw foot scans generated by the foot scanner (described below) do not provide per vertex contact labeling, describing whether a vertex in the scan is in contact with the glass platform. To estimate the per-vertex ground contact information all the scans are registered to the foot template mesh *T̅_{foot}.* Additionally, the ground plane is estimated for each dynamic sequence by fitting a plane to the glass platform scan points. A vertex *υ* ∈ *T_{foot}* is labelled in contact with the ground, if it the point-to-plane distance between the vertex and the ground plan is less than a threshold. A soft threshold is allowed for when estimating contact since the scans have noise. The threshold used is 0.1 mm.

The foot deformation network is an encoder-decoder architecture as described above. A deformation network is trained for each foot separately. Below the network for the right foot is described using the following notation:
- *B_{P}* : is the linear pose corrective blend shape described in Equation 1.
- *B_{C}* : (or *B*_{*F(Foot*)} ) are the predicted deformations for the foot related to pose, contact and foot shape.
- *̅c̅*̅ : is a binary vector of which vertices are in contact with the glass platform.
- *̅z̅*̅ : is a latent code vector.
- *θ_{foot}*: is a foot pose parameters.
- *β_{foot}*: is a foot shape parameters.
- *̅f̅*̅ is a concatenated feature of the pose, shape and contact vector.
- LReLU: leaky rectified linear units with a slope of 0.1 for negative values.
- *FCₘ*: fully connected layer with output dimension m.

The input to the network *̅f̅*̅ is a concatenation feature representation of the foot pose, foot shape and contact. The foot pose representation is based on normalized unit quaternion representation defined by: $F \left({\vec{θ}}_{foot}\right) = Q \left({\vec{θ}}_{foot}\right) - Q \left({\vec{θ}}_{foot}∗\right)$ (7) where *Q(.): R*³ → *R*⁴ is a function computing the quaternion representation of the input axis angle rotation, *θ̅_{foot*}* is the foot in the rest pose. The feature representation in Equation 7 will evaluate to o when the foot is in the rest pose. The foot template mesh *T̅_{foot}* ∈ *R*^{*266x*3} is a high dimensional representation to represent the foot shape. We represent the foot shape using the first two principal components which correspond to the foot length and foot volume. We experimented with different number of coefficients, and the first two PC component result in the lowest generalization error on the validation set. The state of the foot contact with the scene is represented using the *̅c̅*̅ . More formally the input feature to the network: ${\left\{F\left({\vec{θ}}_{foot}\right),{\vec{β}}_{foot 1},{\vec{β}}_{foot 2},\vec{c}\right\}}^{concat} \to \vec{f} ∈ {R}^{320}$ (8) where *̅β̅*̅_{*foot* 1}*, β̅*_{*foot* 2} are the first two PCA components and the *concat* operator is a standard vector concatenation operator.

The architecture is an encoder-decoder fully-connected network, with non-linear activations based on LReLUs. Encoder: $\vec{f} ∈ {R}^{320} \begin{matrix}\to {FC}_{256} \to \\ \to {FC}_{128} \to {FC}_{64} \to \\ \to {FC}_{32} \to \vec{z} ∈ {R}^{16}\end{matrix}$

The dimensionality of the latent code *̅z̅*̅ was chosen by grid search. The inventors experimented with dimensionality 64, 32 and 16. A latent code with dimensionality 16 result in the lowest generalization error of the validation set. The decoder is described by: $\vec{z} ∈ {R}^{16} \begin{matrix}\to {FC}_{32} \to \\ \to {FC}_{64} \to {FC}_{128} \to {FC}_{266} \to {B}_{C}\end{matrix}$ where the predicted deformations for the foot *B_{C}* are added (as the term *B_{F}*) to the linear blend shape *B_{P}* as shown in Equation(s) 6 (and 2).

The unconstrained SUPR kinematic tree introduced above is based on spherical joints. Each spherical joint j is parameterized by *θ̅ⱼ* ∈ *R*³. The spherical joints allow redundant degrees of freedom for some body parts such as the fingers. For the fingers, for example, the axes of rotation are not bone-aligned. In order to simply bend a finger one has to control 3 axis-angle rotations. This is problematic to use by animators and for architectures that regress hand pose parameters from images.

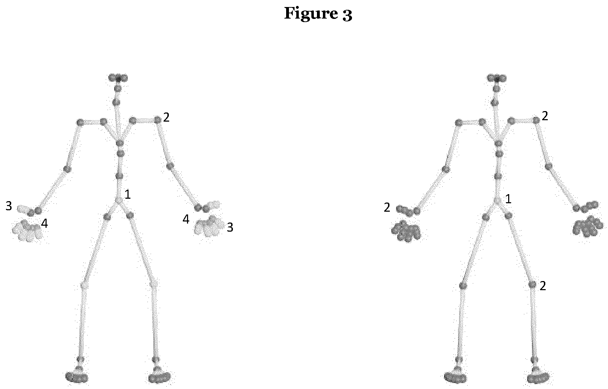

Figure 3 shows a constrained SUPR kinematic tree according to a further embodiment of the invention. The constrained SUPR kinematic tree contains a mixture of joints: root joints (shown in green, ref 1), spherical joints (shown in red, ref. 2), hinge Joints (shown in beige, ref. 3) and double hinge joints (shown in blue, ref. 4). A hinge joint is fully parameterized by an axis of rotation *̅a̅*̅ ∈ *R*³ and a pose parameter *̅θ̅*̅ ∈ *R .* A double hinge joint is defined by two axes of rotation and pose parameters *̅θ̅*̅ ∈ *R*². The axes of rotation for the hinge and double hinge joints are orthogonal to the bone. Therefore, to simply bend a finger in SUPR requires only controlling or regressing one or two scalars. This compact representation is convenient for artists, regression tasks and is more anatomically plausible.

Specifically, this version of SUPR is defined by Equation 9: $M \left(\vec{θ}, \vec{β}, \vec{ψ}\right) = W \left({T}_{p}\left(\vec{θ}, \vec{β}, \vec{ψ}\right),J\left(\vec{β}\right),AX,\vec{θ},WE\right) , ,$ (9) where *AX* ∈ *R*^{30×*3*} is the axis of rotation matrix for the hinge and double hinge joints. The key difference between Equation 1 and Equation 9 is the bone transformation rotation matrix. The rotation matrix for a hinge joint is a constrained rotation matrix, which only allows a single degree of freedom with respect to the axis of rotation *̅a̅*̅. A constrained rotation matrix is defined by: $\left[\begin{matrix}{a}_{x}^{2} + {c}_{θ} \left(1-{a}_{x}^{2}\right) & {a}_{x} {a}_{y} \left(1-{c}_{θ}\right) + {a}_{z} {s}_{θ} & {a}_{x} {a}_{z} \left(1-{c}_{θ}\right) - {a}_{y} {s}_{θ} \\ {a}_{x} {a}_{y} \left(1-{c}_{θ}\right) - {a}_{z} {s}_{θ} & {a}_{y}^{2} + {c}_{θ} \left(1-{a}_{y}^{2}\right) & {a}_{y} {a}_{z} \left(1-{c}_{θ}\right) + {a}_{z} {s}_{θ} \\ {a}_{x} {a}_{z} \left(1-{c}_{θ}\right) + {a}_{y} {s}_{θ} & {a}_{y} {a}_{z} \left(1-{c}_{θ}\right) - {a}_{x} {s}_{θ} & {a}_{z}^{2} + {c}_{ϑ} \left(1-{a}_{z}^{2}\right)\end{matrix}\right]$ where *aₓ,a_{y},a_{z}* are the x , y and z coordinates of the axis of rotation *a̅ . c_{θ}* and *s_{θ}* are cos(*θ*) and sin(*θ*) correspondingly. The constrained version of SUPR only limits the bones' degrees of freedom, by constraining the rotation matrices of the corresponding joints. Therefore, this is an additional functionality, which can be enabled or disabled by a user of regression model.

Male, female and a gender-neutral versions of SUPR and the separated body part models are trained. SUPR pose corrective formulation training is similar to STAR. The key difference is that the pose corrective formulation of SUPR is not conditioned on body shape similar to STAR. The additional shape dependent blend shape is not sparse. The key reason one is able to separate SUPR is the fully sparse factorization of the pose blend shapes and the skinning weights as discussed above.

The SUPR pose corrective blend shapes are trained by minimizing the reconstruction loss between the model prediction and the federated dataset of ground truth registration. The SUPR pose blend shape parameter, namely the joint activation *A* and the pose corrective blend shapes P are trained by stochastic gradient descent. Since the data is based on 4D dynamic sequences, the data is first shuffled such that there is no similarity between subsequent frames. Batches of size 32 are used to minimize the vertex-to-vertex loss given by: ${L}_{D} = \frac{1}{B} {\sum }_{i = 1}^{32} {\left‖M\left({0}^{i}\right)-{R}^{i}\right‖}_{2} .$ (10) where *Rⁱ* is the ith groundtruth registration in the batch. Similar to STAR, an L1 penalty is used on the output of the joint activation*A*, ${L}_{A} = {λ}_{c} \left‖{\sum }_{i = 1}^{K - 1} {ϕ}_{j} \left({A}_{j}\right)\right‖ ,$ (11) where λ*_{c}* is a scalar constant. The full objective for the pose space is defined by Equation: $L = {L}_{A} + {L}_{D} , ,$ (12)\ where Equation 12 is minimized with respect to the pose corrective regression weights **K_{1:80}**, activation weights **A_{1:80}**. A batch size B = 32 and the ADAM is used.

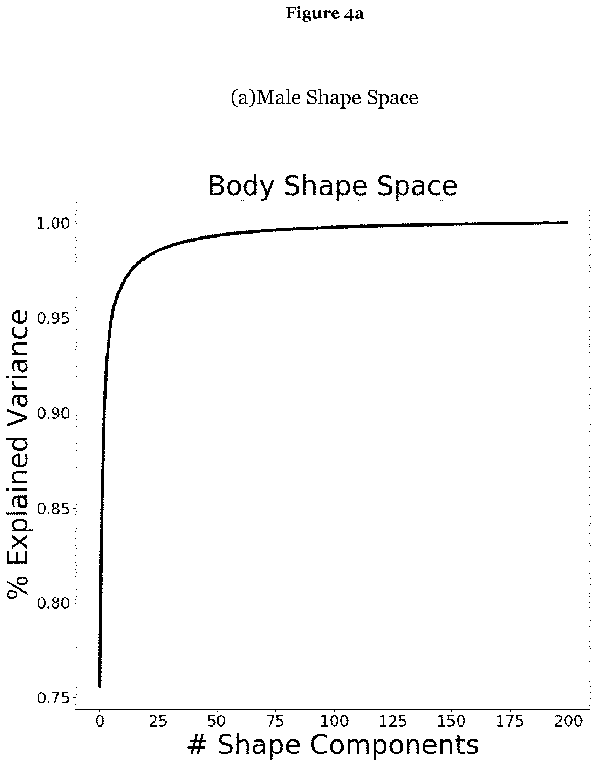

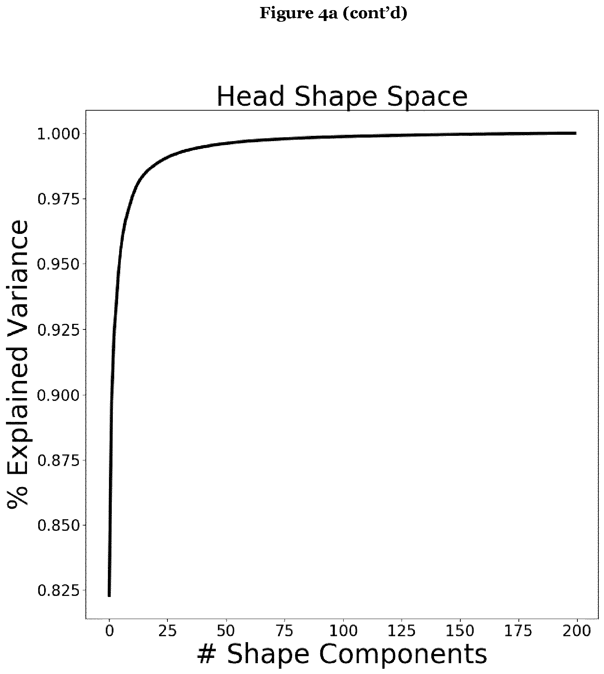

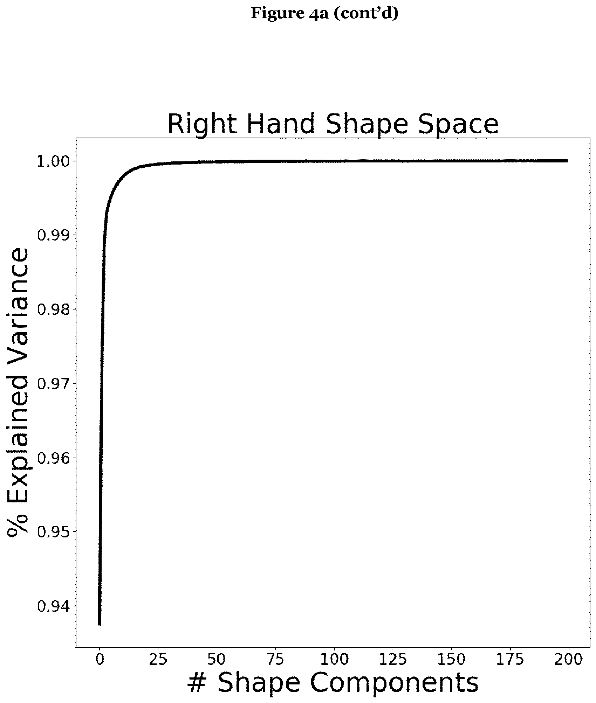

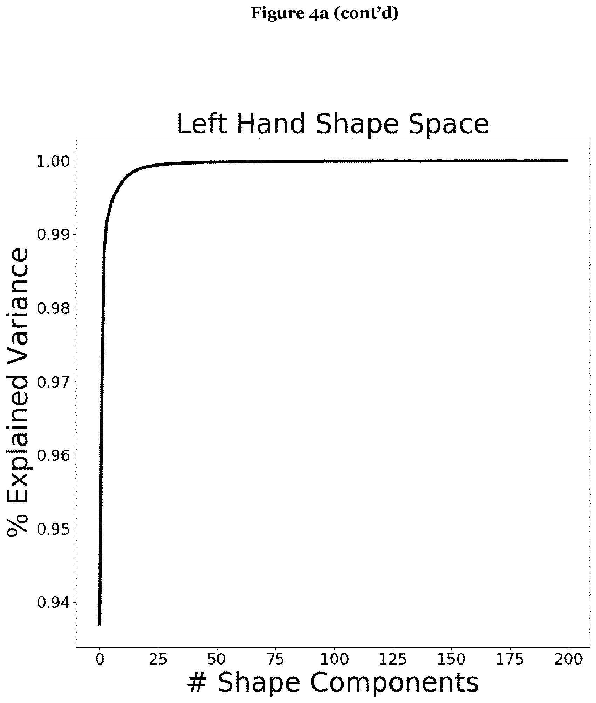

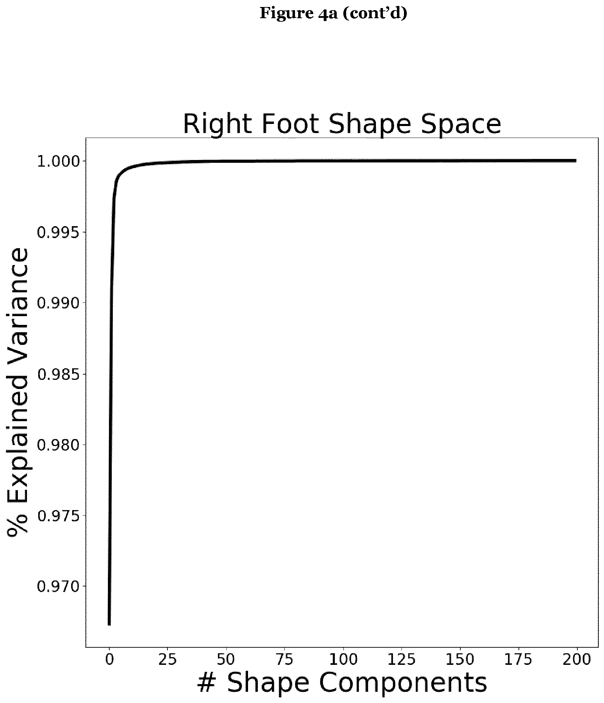

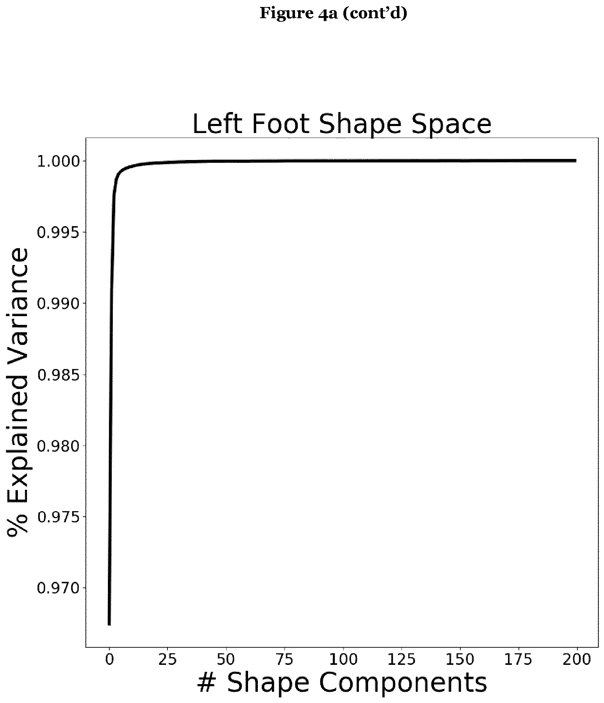

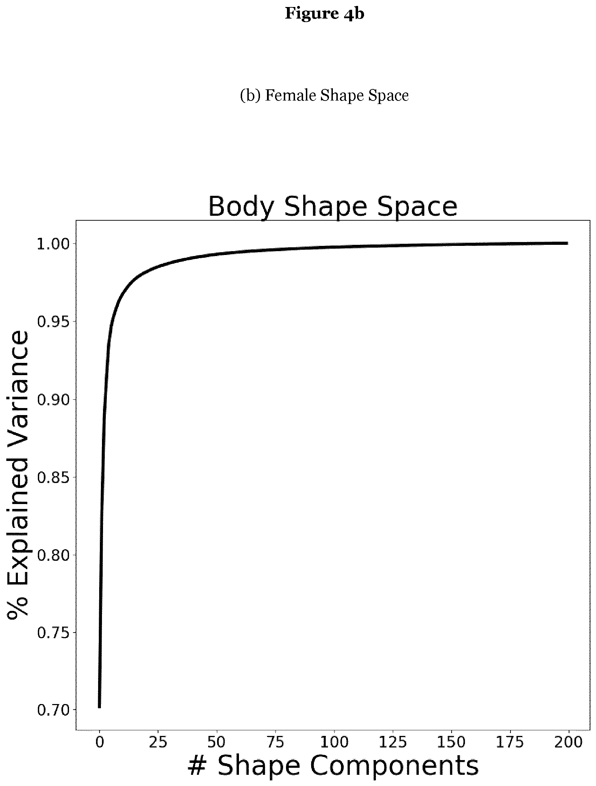

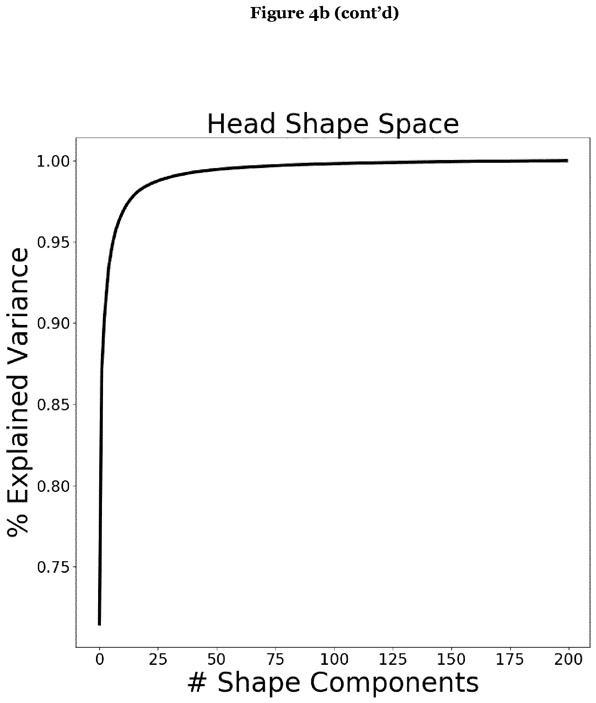

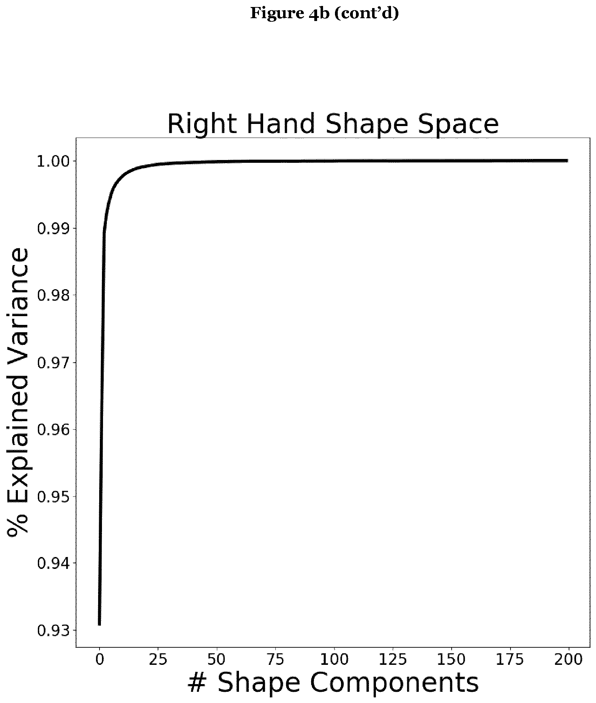

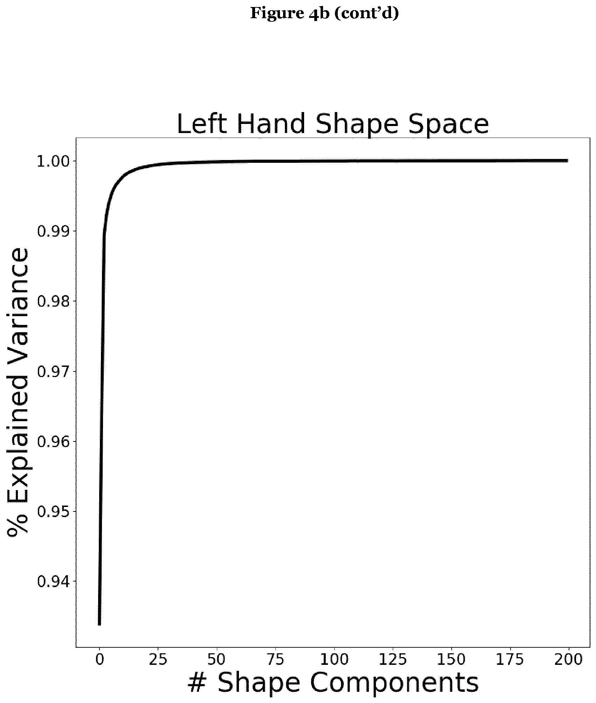

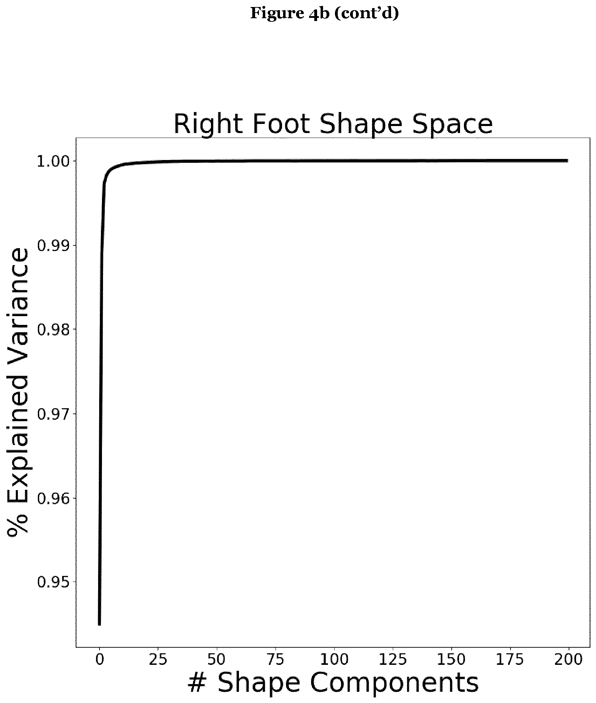

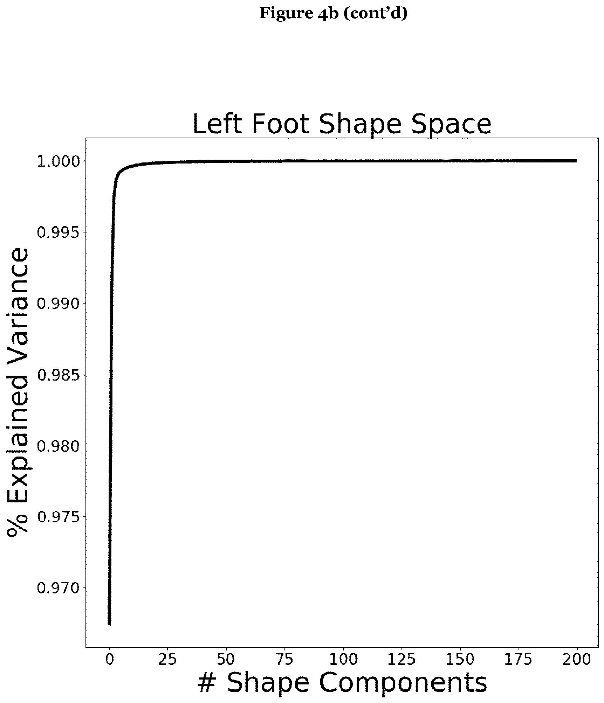

Given the trained blend shapes, the body part pose space is separated as discussed above. A local shape space is further trained for each of the separated body part models. The CAESAR head, hand of the CAESAR registrations are used to train a local shape space for SUPR-Head and SUPR-Head. The local shape space for the foot is trained on the curate high resolution foot scans, as the foot in the CAESAR scans were noisy. The percentage of explained variance as the number of shape components for each body part is shown in figure 4.

Given the learned linear blend shapes trained above, and the local shape space for the foot, the deformation network is trained for the foot deformation described above. For training the deformation network, both contact and non-contact foot registrations are used. The network is trained by minimizing the L1 loss between the model and the foot registrations: $L = \left‖M\left({0}^{i}, {\vec{c}}^{i}, {\vec{β}}^{i}\right)-{R}^{i}\right‖ . ,$ (13)

The training loss is minimized using stochastic gradient descent, where ADAM was used with batch size 32.

A federated dataset of 3D scans is used for training. Data is acquired using 4 types of scanners: a full body scanner, a hand scanner, a head scanner and a foot scanner. All the scanners are 4D scanners, capturing high resolution dynamic sequences for each body part. Datasets that are either publicly available for research purposes or commercial datasets from private vendors are additionally leveraged.

More specifically, to study and model minimally-clothed human body deformations, a 4D scanner that captures the full 3D human body shape at 60 frames per second (fps) was used. The full-body scanner was custom built by 3dMD (Atlanta, GA). The system uses 22 pairs of stereo cameras, 22 color cameras, and speckle-light projectors. The speckle patterns allow accurate stereo reconstruction of 3D shape. This speckle pattern alternates at 120 fps with large white-light LED panels that provide a smooth nearly uniform illumination. The scanner outputs high resolution meshes with approximately 150,000 vertices. The high resolution meshes in addition to the high frame rate (60 fps) allows to model the subtle deformations of the human body. The full body scanner scanning volume is sufficient to capture poses such as a full leg split by a ballerina, or a sitting or lying down poses.

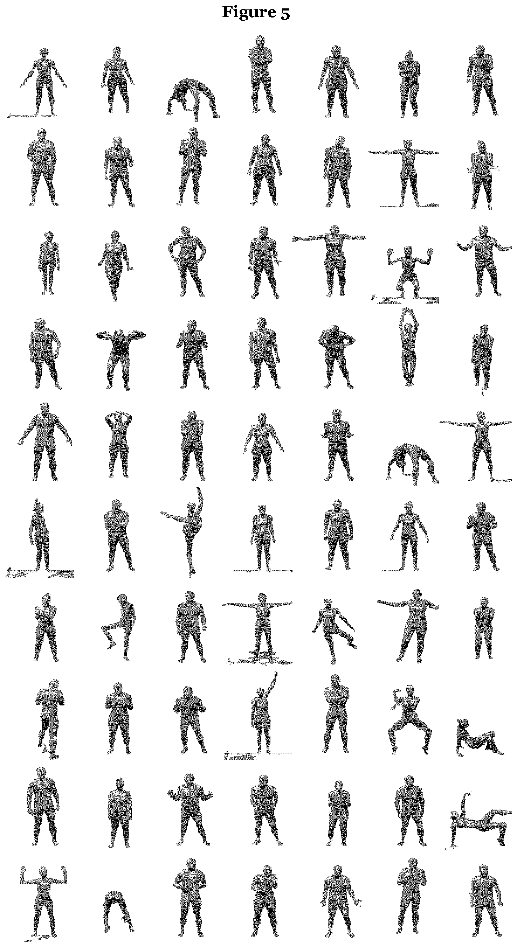

Figure 5 shows an overview of the scans captured in the full body scanner. The scans are detailed and high resolution. The captured data contains a wide diversity of body shapes. The training scans include extreme body shapes such as body builders and anorexia nervosa patients. Furthermore, the data capture protocol include athletes such as a ballerina and a yoga expert. Additionally, since SUPR has a full expressive kinematic tree, including a fully articulated hand, jaw and an expressive head, expressive sequences are captured where subjects performed motions communicating emotions and intent.

However, despite the 4D scanner high resolution output meshes, the output scans have poorly reconstructed hands and foot. The foot sole is poorly reconstructed because it is always occluded by the glass platform. The full body scans are not suitable for learning head, hand and foot deformations. Moreover, the head resolution is not sufficient to capture subtle facial expressions.

In addition to the scans from the 4D body scanner, a number of datasets of 3D human body scans were leveraged. To capture the diversity of human body shape, the CAESAR [68] and SizeUSA [60] datasets were used. The CAESAR database contains 1700 male and 2107 female subjects distributed according to the US population in 1990. A limitation of CAESAR's capture protocol is that all women subject were in sports-bra-type top. As a result of the bra type, the CAESAR female chest shape does not reflect the diversity of shapes found in real applications. Additionally, the SizeUSA dataset was used, which contains a richer diversity of body shapes and the female subjects wore a traditional bra. The SizeUSA dataset contains 10, 000 subjects (2845 male and 6436 female).

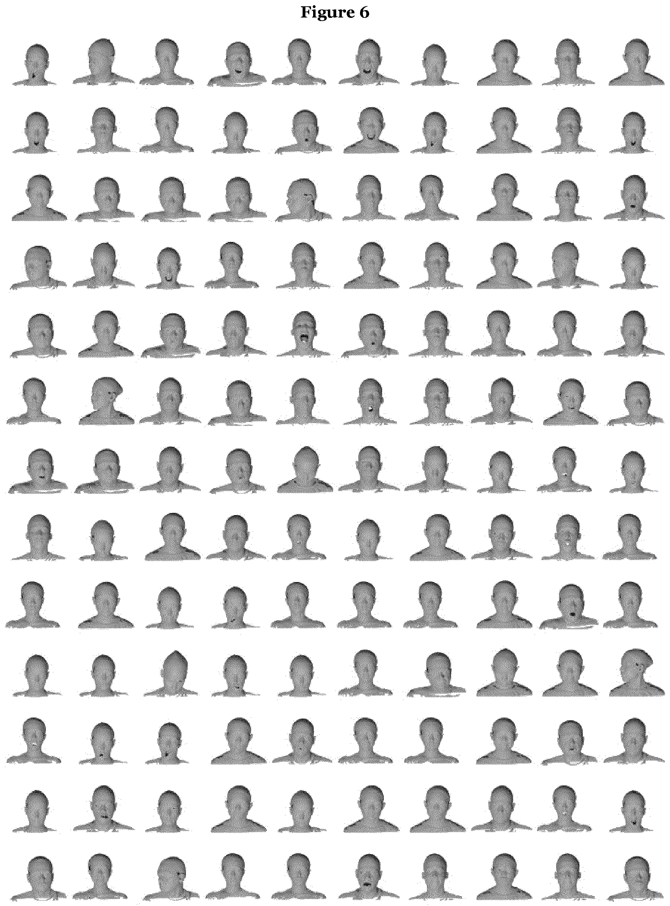

Figure 6 shows a sample of captured head scans used in training SUPR according to an embodiment of the invention. The human head, including the face, the back of the head including the scalp and the neck, exhibits a range of highly dynamic deformations. The human head 3D deformations are due to facial expressions, jaw movement, head movement relative to the neck and body movement relative to the neck, for example when shrugging. A dedicated head scanner was used to complement the full body 4D scanner. Similar to the full body scanner, the head scanner is a 4D scanner capturing high-resolution dynamic sequences. The head scanner has a significantly higher number of cameras focused on the head region compared to the body scanner. More specifically, the scanner employs 6 pairs of stereo cameras to compute shape and geometry with the assistance of custom speckle projectors. It also includes 6 color cameras and white-light panels to capture texture. The scanning setup allows to capture the subtle facial expressions. Consequently, the data capturing protocol was designed to capture subtle and extreme facial expressions, full movement of the jaw, in addition to neck movement poses such as looking up, down to the left or right. However, the head scanner has a limited scanning volume making it infeasible to capture the full range of motion of the human head relative to the body.

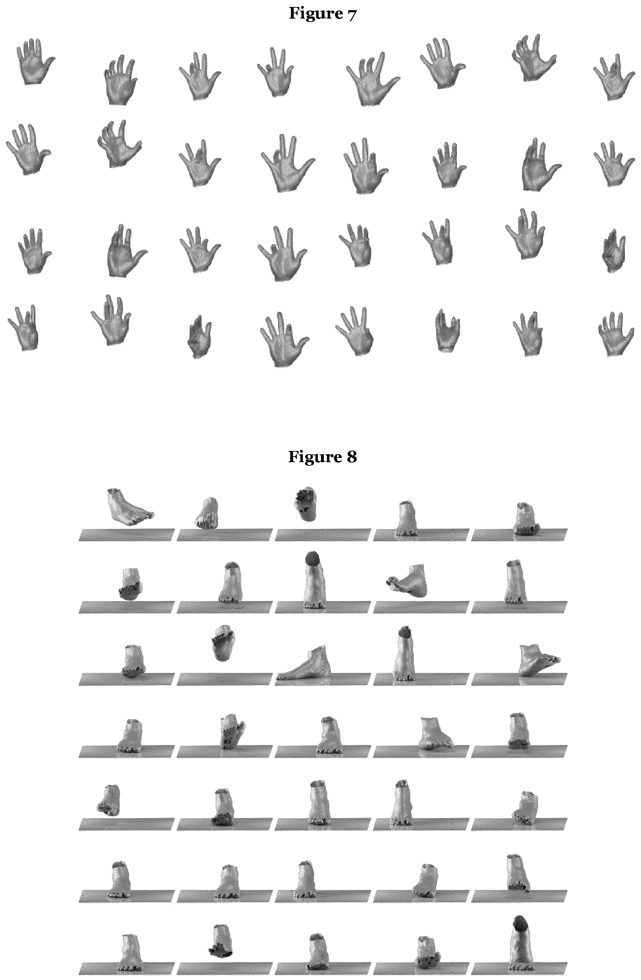

Figure 7 shows a sample of captured hand scans used in training SUPR according to an embodiment of the invention. The reconstructed fingers in full-body scans are typically noisy and poorly reconstructed, as shown in figure 5. To better capture the hands, the data from the MANO hand model [69] is used. These hand scans are used to learn the pose corrective blend shapes due to finger articulation.

Figure 8 shows a sample of captured foot scans used in training SUPR according to an embodiment of the invention. The human foot is a complex structure containing muscles, other soft tissue, and a quarter of the bones in the human skeleton. SUPR goes beyond existing expressive human body models to model the human foot.

To enable capturing the full range of the human foot deformations, a custom built scanner dedicated for the foot is used.

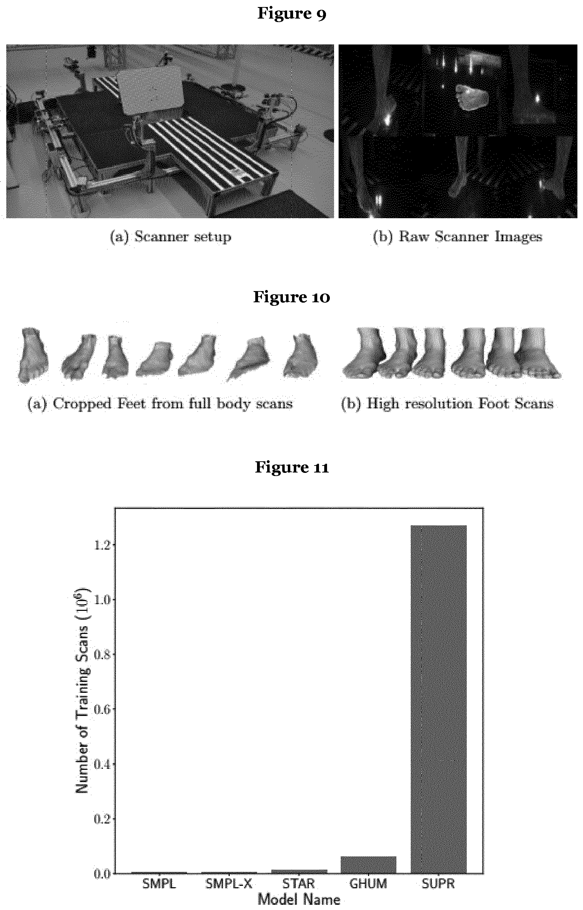

Figure 9 shows an overview of the foot scanner. The scanner is designed to be mechanically stable to capture dynamic poses such as walking, running or jumping. The output scans are high resolution and can capture the movement of the toes. The scanner setup features a runway for the subjects to run or walk. The scanner also comprises a transparent glass platform, which can support subjects up to 150 kg, which allows to capture the foot sole deformation due to ground contact. The scanner uses 10 pairs of stereo cameras, including dedicated cameras capturing the bottom of the foot. The frame rate of the scanner is 10 fps. The output scans contain on average 30, 000 points.

Figure 9b shows raw scanner images, where the foot is visible from all views, including the foot sole.

A total of 30 subjects, 15 female and 15 male subjects were captured with a total of 70, 000 scans. The data capture protocol is designed to explore the space of human foot deformations. The capture protocol is divided into two main parts: 1) Non-Contact sequences 2) Contact Sequences. In the non-contact sequences, the subject foot is not in contact with the glass platform. The data capture protocol for such sequences is designed to explore the full degree of freedom of the toes and the ankle. In contact sequences the subject's foot is partially or in full contact with the glass platform. The contact sequences include motions such as walking/running and jumping. In total 356 dynamic sequences were captured which is the largest training dataset for human scans report in the literature.

The 30 subjects captured in the dynamic foot scanner do not represent the diversity of human foot shape. Accurate modeling of the human foot shape is crucial for the footwear industry. The feet in the CAESAR and SizeUSA scans, shown in Figure 10a, are noisy, missing, and are not good enough to learn a statistical model. To accurately model the diversity of the human foot scans, an additional 7, 000 high resolution foot scans were acquired from a private vendor.

Figure 10 compares the curated high resolution foot scans in comparison to CAESAR and SizeUSA foot scans. In contrast to CAESAR and SizeUSA, the curated dataset of foot scans is significantly less noisy, with on average 10x the resolution of a foot scans from CAESAR/SizeUSA. The high resolution foot scans preserve the 3D geometry of the individual toes. This data is used in learning the local shape space of SUPR-Foot.

In summary, SUPR and the separated body parts are trained on a total of 1.2 million scans.

Figure 11 compares the scale of training datasets used to train body models in the literature. As figure 11 highlights, the scale of the training data is an order of magnitude larger than the largest training dataset reported in the literature (60K, for the GHUM model).

### EXPERIMENTS

In order to evaluate the generalization of SUPR and the separated head, hand, and foot model to unseen test subjects, the full SUPR body model was first evaluated against existing state of the art expressive human body models SMPL-X and GHUM, then the separated SUPR-Head model was evaluated against existing head models FLAME and GHUM-Head, and then the hand model compared to GHUM-Hand and MANO. Finally, the SUPR-Foot was evaluated.

The publicly available 3DBodyTex dataset [59] was used, which includes 100 male and 100 female subjects. The GHUM template and the SMPL-X template were registered to all the scans; note SMPL-X and SUPR share the same mesh topology. All registered meshes were visually inspected for quality control. Given registered meshes, each model was fit by minimizing the vertex-to-vertex loss (υ*2*υ) between the model surface and the corresponding registration. The free optimization parameters for all models are the pose parameters *̅θ̅*̅ and the shape parameters *̅β̅*̅. For fair comparison with GHUM, errors were only reported for up to 16 shape components since this is the maximum in the GHUM release. SUPR includes 300 shape components that would reduce the errors significantly.

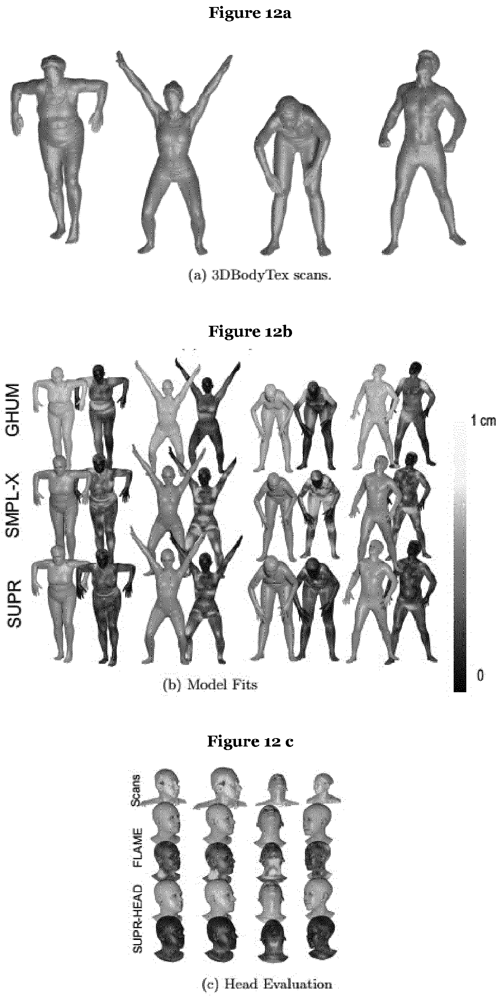

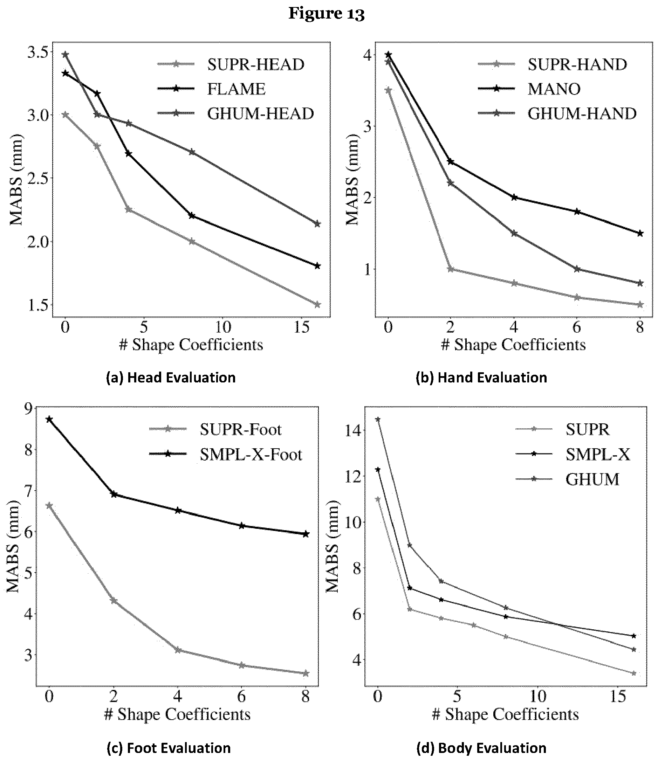

The inventors followed the 3DBodyTex evaluation protocol and excluded the face and the hands when reporting the mean absolute error *(mabs).* The mean absolute error of each model were reported on both male and female registrations. For the GHUM model, the PCA-based shape and expression space were used. The model generalization error is reported in Fig. 13d and a qualitative sample of the model fits is shown in Fig. 12b. SUPR uniformly exhibits a lower error than SMPL-X and GHUM.

The head evaluation test set contains a total of 3 male and 3 female subjects, with sequences containing extreme facial expression, jaw movement and neck movement. As for the full body, the GHUM-Head model and the FLAME template were registered to the test scans, and these registered meshes were used for evaluation. For the GHUM-Head model, the linear PCA expression and shape space was used. All models were evaluated using a standard *υ2υ* objective, where the optimization free variables are the model pose, shape parameters, and expression parameters. 16 expression parameters were used when fitting all models. For GHUM-Head the internal head geometry (corresponding to a tongue-like structure) was excluded when reporting the *υ*2*υ* error. Fig. 13a shows the model generalization as a function of the number of shape components. A sample of the model fits is shown in Fig. 12c. Both GHUM-Head and FLAME fail to capture head-to-neck rotations plausibly, despite each featuring a full head mesh including a neck. This is clearly highlighted by the systematic error around the neck region in Fig. 12c. In contrast, SUPR-Head captures the head deformations and the neck deformations plausibly and uniformly generalizes better.

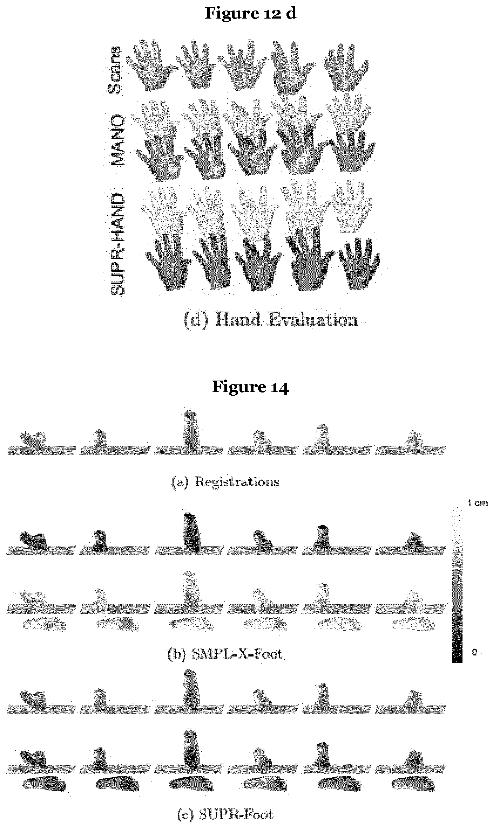

The publicly available MANO test set [21] was used for hand evaluation. Since both SUPR-Hand and MANO share the same topology, we used the MANO test registrations provided by the authors to evaluate both models. To evaluate GHUM-Hand, the model was registered to the MANO test set. However, the GHUM-Hand features a hand and an entire forearm, therefore to register GHUM-Hand vertices on the model corresponding to the hand were selected and only that hand part of the model was registered to the MANO scans. All models were fit to the corresponding registrations using a standard *υ2υ* loss. For GHUM-Hand, the model was only fit to the selected hand vertices. The optimization free variables are the model pose and shape parameters. Fig. 13b shows generalization as a function of the number of shape parameters, where SUPR-Hand uniformly exhibits a lower error compared to both MANO and GHUM-Hand. A sample qualitative evaluation of MANO and SUPR-Hand is shown in Fig. 12d. In addition to a lower overall fitting error, SUPR-Hand has a lower error around the wrist region than MANO.

SUPR-Foot generalization was evaluated on a test set of held-out subjects. The test set contains 120 registrations for 5 subjects that explore the foot's full range of motion, such as ankle and toe movements. The foot was extracted from the SMPL-X body model as a baseline and refer to it as SMPL-X-Foot. The SUPR-Foot template was registered to the test scans and the SUPR-Foot and SMPLX-Foot were fit to the registrations using a standard *υ*2*υ* objective. For SUPR-Foot, the optimization free variables are the model pose and shape parameters, while for SMPL-X-Foot the optimization free variables are the foot joints and the SMPLX shape parameters. The models' generalization as a function of the number of shape components is reported in Fig. 13c. A sample of the model fits are shown in Fig. 14. SUPR-Foot better captures the degrees of freedom of the foot, such as moving the ankle, curling the toes, and contact deformations.

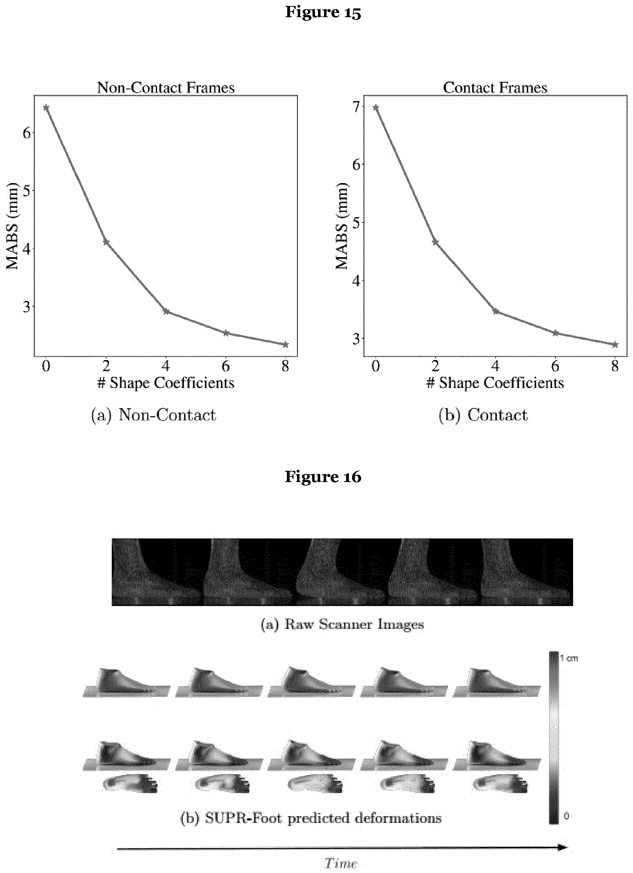

Figure 15 shows an evaluation of SUPR-Foot on frames where the foot was not in contact with the glass platform (a) and frames where the foot was partially or fully in contact with the glass platform (b). The model mean absolute error is reported as a function of the number of shape components used on non-contact frames in Figure 15a and contact frames in Figure 15b.

A key contribution of the invention is introducing a novel deformation function, which relates the foot deformations to the foot pose, shape and ground contact. The influence of each term on the model generalization can be illustrated by ablating the foot deformation network described above. Variations of the deformation network from scratch are retained and each model is refit to the test set. The model *υ*2*υ* error is reported the following table:

| Model | Non-Contact v2v (mm) ↓ | With-Contact v2v (mm) ↓ |
|---|---|---|
| SUPR-Foot *_{lbs}* | 5.235 ±0.126 | 6.691 ±1.369 |
| SUPR-Foot _{*lbs*+*l*} | 4.587 ±0.589 | 5.364 ±1.279 |
| SUPR-Foot _{*lbs*+*l*+*f*(*θ*)} | 2.982 ±0.859 | 4.129 ±1.883 |
| SUPR-Foot _{*lbs*+*l*+*f*(θ*,β*)} | 2.910 ±0.728 | 3.934 ±1.819 |
| SUPR-Foot (ours) | 12.753 ±0.821 | 13.122 ±1.462 |

**Here, SUPR-Foot** *_{lbs}* corresponds to model with linear blend skinning, no additive correctives used. SUPR-Foot *_{lbs+l}* corresponds to lbs in addition to the linear correctives, SUPR-Foot _{*lbs*+*l*+*f*(*θ*)} is adding the non-linear deformation where the network is condition on pose only, SUPR-Foot _{*lbs*+*l*+*f(θ,β̅*}) where the network is conditioned on pose and shape information, while SUPR-Foot is the full model. The result clearly show the vertex to vertex error decreasing on the held out test set when adding each term in the foot deformation function across both the contact and non-contact frames.

The foot deformation network was further evaluated on a dynamic sequence shown in Fig. 16. Fig. 16a shows raw scanner footage of a subject performing a body rocking movement, where they lean forward then backward effectively changing the body center of mass. the corresponding SUPR-Foot fits and a heat map of the magnitude of predicted deformations is visualized in Fig. 16b. When the subject is leaning backward and the center of mass is directly above the ankle, the soft tissue at heel region of the foot deforms due to contact.

The SUPR-Foot network predicts significant deformations localized around the heel region compared to the rest of the foot. However, when the subject leans forward the center of mass is above the toes, consequently the soft tissue at the heel is less compressed. The SUPR-Foot predicted deformations shift from the heel towards the front of the foot.

### REFERENCES

1. Brett Allen, Brian Curless, Brian Curless, and Zoran Popovic. The space of human body shapes: Reconstruction and parameterization from range scans. ACM TOG, 22(3):587-594, 2003.
2. D. Anguelov, P. Srinivasan, D. Koller, S. Thrun, J. Rodgers, and J. Davis. SCAPE: Shape Completion and Animation of PEople. ACM TOG, 24(3):408-416, 2005.
3. Yinpeng Chen, Zicheng Liu, and Zhengyou Zhang. Tensor-based human body modeling. In Proceedings of the IEEE Conference on Computer Vision and Pattern Recognition, pages 105-112, 2013.
4. Nils Hasler, Carsten Stoll, Martin Sunkel, Bodo Rosenhahn, and Hans-Peter Seidel. A statistical model of human pose and body shape. Comput. Graph. Forum, 28(2):337-346, 2009.
5. David A. Hirshberg, Matthew Loper, Eric Rachlin, and Michael J. Black. Coregistration: Simultaneous alignment and modeling of articulated 3D shape. In European Conference on Computer Vision, volume 7577, pages 242-255, 2012.
6. Matthew Loper, Naureen Mahmood, Javier Romero, Gerard Pons-Moll, and Michael J. Black. SMPL: A skinned multi-person linear model. ACM Transactions on Graphics, (Proc. SIGGRAPH Asia), 34(6):248:1-248:16, October 2015.
7. Ahmed A. A. Osman, Timo Bolkart, and Michael J. Black. STAR: Sparse trained articulated human body regressor. In ECCV, pages 598-613, 2020.
8. Leonid Pishchulin, Stefanie Wuhrer, Thomas Helten, Christian Theobalt, and Bernt Schiele. Building statistical shape spaces for 3D human modeling. PR, 67:276-286, 2017.
9. Haoyang Wang, Riza Alp Guler, Iasonas Kokkinos, George Papandreou, and Stefanos Zafeiriou. BLSM: A bone-level skinned model of the human mesh. In ECCV, pages 1-17, 2020.
10. Brian Amberg, Reinhard Knothe, and Thomas Vetter. Expression invariant 3D face recognition with a morphable model. pages 1-6, 2008.
11. Alan Brunton, Timo Bolkart, and Stefanie Wuhrer. Multilinear wavelets: A statistical shape space for human faces. In ECCV, pages 297-312, 2014.
12. Chen Cao, Yanlin Weng, Shun Zhou, Yiying Tong, and Kun Zhou. Facewarehouse: A 3d facial expression database for visual computing. IEEE Transactions on Visualization and Computer Graphics, 20(3):413-425, 2014.
13. Tianye Li, Timo Bolkart, Michael. J. Black, Hao Li, and Javier Romero. Learning a model of facial shape and expression from 4D scans. ACM Transactions on Graphics, (Proc. SIGGRAPH Asia), 36(6), 2017.
14. Ruilong Li, Karl Bladin, Yajie Zhao, Chinmay Chinara, Owen Ingraham, Pengda Xiang, Xinglei Ren, Pratusha Prasad, Bipin Kishore, Jun Xing, et al. Learning formation of physically-based face attributes. In CVPR, pages 3410-3419, 2020.
15. Anurag Ranjan, Timo Bolkart, Soubhik Sanyal, and Michael J. Black. Generating 3D faces using convolutional mesh autoencoders. In ECCV, pages 725-741, 2018.
16. Haotian Yang, Hao Zhu, Yanru Wang, Mingkai Huang, Qiu Shen, Ruigang Yang, and Xun Cao. FaceScape: a large-scale high quality 3D face dataset and detailed riggable 3D face prediction. In CVPR, pages 601-610, 2020. 2, 516 Osman et al.
17. Daniel Vlasic, Matthew Brand, Hanspeter Pfister, and Jovan Popovic. Face transfer with multilinear models. ACM TOG, 24(3):426-433, 2005.
18. Sameh Khamis, Jonathan Taylor, Jamie Shotton, Cem Keskin, Shahram Izadi, and Andrew Fitzgibbon. Learning an efficient model of hand shape variation from depth images. In Proceedings of the IEEE conference on computer vision and pattern recognition, pages 2540-2548, 2015.
19. Dominik Kulon, Haoyang Wang, Riza Alp Güler, Michael M. Bronstein, and Stefanos Zafeiriou. Single image 3D hand reconstruction with mesh convolutions. In BMVC, page 45, 2019.
20. Iason Oikonomidis, Nikolaos Kyriazis, and Antonis A. Argyros. Efficient model based 3D tracking of hand articulations using kinect. In BMVC, pages 1-11, 2011.
21. Javier Romero, Dimitrios Tzionas, and Michael J. Black. Embodied hands: Modeling and capturing hands and bodies together. ACM Transactions on Graphics, (Proc. SIGGRAPH Asia), 36(6):245:1-245:17, November 2017.
22. Breannan Smith, Chenglei Wu, He Wen, Patrick Peluse, Yaser Sheikh, Jessica K. Hodgins, and Takaaki Shiratori. Constraining dense hand surface tracking with elasticity. ACM TOG, 39(6):219:1-219:14, 2020.
23. Anastasia Tkach, Mark Pauly, and Andrea Tagliasacchi. Sphere-meshes for realtime hand modeling and tracking. ACM TOG, 35(6):222:1-222:11, 2016.
24. Angjoo Kanazawa, Michael J Black, David W Jacobs, and Jitendra Malik. Endto-end recovery of human shape and pose. In Proceedings of the IEEE Conference on Computer Vision and Pattern Recognition, pages 7122-7131, 2018.
25. Muhammed Kocabas, Nikos Athanasiou, and Michael J Black. Vibe: Video inference for human body pose and shape estimation. arXiv preprint arXiv:1912.05656, 2019.
26. Nikos Kolotouros, Georgios Pavlakos, Michael J. Black, and Kostas Daniilidis. Learning to reconstruct 3D human pose and shape via model-fitting in the loop. In ICCV, pages 2252-2261, 2019.
27. Yao Feng, Fan Wu, Xiaohu Shao, Yanfeng Wang, and Xi Zhou. Joint 3D face reconstruction and dense alignment with position map regression network. In ECCV, pages 534-551, 2018.
28. Ayush Tewari, Florian Bernard, Pablo Garrido, Gaurav Bharaj, Mohamed Elgharib, Hans-Peter Seidel, Patrick Pérez, Michael Zollhöfer, and Christian Theobalt. FML: Face Model Learning from Videos. In CVPR, pages 10812-10822, 2019.
29. Soubhik Sanyal, Timo Bolkart, Haiwen Feng, and Michael Black. Learning to regress 3D face shape and expression from an image without 3D supervision. In CVPR, pages 7763-7772, 2019.
30. Adnane Boukhayma, Rodrigo de Bem, and Philip H. S. Torr. 3D hand shape and pose from images in the wild. In CVPR, pages 10843-10852, 2019.
31. Yana Hasson, G"ul Varol, Dimitrios Tzionas, Igor Kalevatykh, Michael J. Black, Ivan Laptev, and Cordelia Schmid. Learning joint reconstruction of hands and manipulated objects. In CVPR, pages 11807-11816, 2019.
32. Mihai Fieraru, Mihai Zanfir, Elisabeta Oneata, Alin-Ionut Popa, Vlad Olaru, and Cristian Sminchisescu. Three-dimensional reconstruction of human interactions. In CVPR, pages 7214-7223, 2020.
33. Thiemo Alldieck, Gerard Pons-Moll, Christian Theobalt, and Marcus Magnor. Tex2Shape: Detailed full human body geometry from a single image. In ICCV, pages 2293-2303, 2019.
34. Christoph Lassner, Gerard Pons-Moll, and Peter V. Gehler. A generative model of people in clothing. In ICCV, pages 853-862, 2017.
35. Qianli Ma, Jinlong Yang, Anurag Ranjan, Sergi Pujades, Gerard Pons-Moll, Siyu Tang, and Michael J. Black. Learning to dress 3D people in generative clothing. In CVPR, pages 6468-6477, 2020.
36. Chao Zhang, Sergi Pujades, Michael Black, and Gerard Pons-Moll. Detailed, accurate, human shape estimation from clothed 3D scan sequences. In CVPR, pages 5484-5493, 2017.
37. Gerard Pons-Moll, Sergi Pujades, Sonny Hu, and Michael Black. ClothCap: Seamless 4D clothing capture and retargeting. ACM TOG, 36(4):73:1-73:15. 2
38. Bharat Lal Bhatnagar, Garvita Tiwari, Christian Theobalt, and Gerard Pons- Moll. Multi-garment net: Learning to dress 3D people from images. In ICCV, pages 5419-5429, 2019. 2
39. Chaitanya Patel, Zhouyingcheng Liao, and Gerard Pons-Moll. TailorNet: Predicting clothing in 3D as a function of human pose, shape and garment style. In CVPR, pages 7363-7373, 2020.
40. Mihai Zanfir, Elisabeta Oneata, Alin-Ionut Popa, Andrei Zanfir, and Cristian Sminchisescu. Human synthesis and scene compositing. In AAAI, pages 12749-12756, 2020.
41. Yan Zhang, Mohamed Hassan, Heiko Neumann, Michael J Black, and Siyu Tang. Generating 3D people in scenes without people. In CVPR, pages 6194-6204, 2020.
42. Siwei Zhang, Yan Zhang, Qianli Ma, Michael J. Black, and Siyu Tang. PLACE: Proximity learning of articulation and contact in 3D environments. 2020.
43. Matthew M. Loper, Naureen Mahmood, and Michael J. Black. MoSh: Motion and shape capture from sparse markers. ACM Transactions on Graphics, (Proc. SIGGRAPH Asia), 33(6):220:1-220:13, November 2014.
44. Naureen Mahmood, Nima Ghorbani, Nikolaus F. Troje, Gerard Pons-Moll, and Michael J. Black. AMASS: Archive of motion capture as surface shapes. In ICCV, pages 5442-5451, 2019.
45. Timo von Marcard, Gerard Pons-Moll, and Bodo Rosenhahn. Human pose estimation from video and IMUs. IEEE TPAMI, 38(8):1533-1547, 2016.
46. Yinghao Huang, Federica Bogo, Christoph Lassner, Angjoo Kanazawa, Peter V. Gehler, Javier Romero, Ijaz Akhter, and Michael J. Black. Towards accurate marker-less human shape and pose estimation over time. pages 421-430, 2017.
47. Yinghao Huang, Manuel Kaufmann, Emre Aksan, Michael J. Black, Otmar Hilliges, and Gerard Pons-Moll. Deep inertial poser: Learning to reconstruct human pose from sparse inertial measurements in real time. ACM Transactions on Graphics, (Proc. SIGGRAPH Asia), 37:185:1-185:15, November 2018. Two first authors contributed equally.
48. Gyeongsik Moon, Takaaki Shiratori, and Kyoung Mu Lee. Deephandmesh: A weakly-supervised deep encoder-decoder framework for high-fidelity hand mesh modeling. In European Conference on Computer Vision (ECCV), 2020.
49. Hongyi Xu, Eduard Gabriel Bazavan, Andrei Zanfir, William T Freeman, Rahul Sukthankar, and Cristian Sminchisescu. GHUM & GHUML: Generative 3D human shape and articulated pose models. In CVPR, pages 6184-6193, 2020.
50. Silvia Zuffi and Michael J Black. The stitched puppet: A graphical model of 3d human shape and pose. In Proceedings of the IEEE Conference on Computer Vision and Pattern Recognition, pages 3537-3546, 2015.
18 Osman et al. 51. Hanbyul Joo, Tomas Simon, and Yaser Sheikh. Total capture: A 3D deformation model for tracking faces, hands, and bodies. In CVPR, pages 8320-8329, 2018.
52. Georgios Pavlakos, Vasileios Choutas, Nima Ghorbani, Timo Bolkart, Ahmed A. A. Osman, Dimitrios Tzionas, and Michael J. Black. Expressive body capture: 3d hands, face, and body from a single image. In Proceedings IEEE Conf. on Computer Vision and Pattern Recognition (CVPR), 2019.
53. Andrei Zanfir, Eduard Gabriel Bazavan, Hongyi Xu, William T Freeman, Rahul Sukthankar, and Cristian Sminchisescu. Weakly supervised 3d human pose and shape reconstruction with normalizing flows. In European Conference on Computer Vision, pages 465-481. Springer, 2020.
54. Volker Blanz and Thomas Vetter. A morphable model for the synthesis of 3D faces. In SIGGRAPH, volume 99, pages 187-194, 1999.
55. James Booth, Anastasios Roussos, Allan Ponniah, David Dunaway, and Stefanos Zafeiriou. Large scale 3D morphable models. IJCV, 126(2-4):233-254, 2018.
56. Pascal Paysan, Reinhard Knothe, Brian Amberg, Sami Romdhani, and Thomas Vetter. A 3d face model for pose and illumination invariant face recognition. In 2009 Sixth IEEE International Conference on Advanced Video and Signal Based Surveillance, pages 296-301. Ieee, 2009.
57. Bryan P Conrad, Michael Amos, Irene Sintini, Brian Robert Polasek, and Peter Laz. Statistical shape modelling describes anatomic variation in the foot. Footwear Science, 11(sup1):S203-S205, 2019.
58. Abhishektha Boppana and Allison P Anderson. Dynamic foot morphology explained through 4d scanning and shape modeling. Journal of Biomechanics, 122:110465, 2021.
59. Alexandre Saint, Eman Ahmed, Kseniya Cherenkova, Gleb Gusev, Djamila Aouada, Bjorn Ottersten, et al. 3DBodyTex: Textured 3D body dataset. pages 495-504, 2018.
60. SizeUSA dataset. https://www.tc2.com/size-usa.html (2017) 2, 21
61. Anguelov, D., Srinivasan, P., Koller, D., Thrun, S., Rodgers, J., Davis, J.: SCAPE: Shape Completion and Animation of PEople. ACM TOG 24(3), 408-416 (2005) 4
62. Boppana, A., Anderson, A.P.: Dynamic foot morphology explained through 4d scanning and shape modeling. Journal of Biomechanics 122, 110465 (2021) 6, 9
63. Joo, H., Simon, T., Sheikh, Y.: Total capture: A 3D deformation model for tracking faces, hands, and bodies. In: CVPR. pp. 8320-8329 (2018) 4
64. Kingma, D.P., Welling, M.: Auto-encoding variational bayes. arXiv preprint arXiv:1312.6114 (2013) 21
65. Loper, M., Mahmood, N., Romero, J., Pons-Moll, G., Black, M.J.: SMPL: A skinned multi-person linear model. ACM Transactions on Graphics, (Proc. SIGGRAPH Asia) 34(6), 248:1-248:16 (Oct 2015) 4
66. Osman, A.A.A., Bolkart, T., Black, M.J.: STAR: Sparse trained articulated human body regressor. In: ECCV. pp. 598-613 (2020) 4
67. Pavlakos, G., Choutas, V., Ghorbani, N., Bolkart, T., Osman, A.A.A., Tzionas, D., Black, M.J.: Expressive body capture: 3d hands, face, and body from a single image. In: Proceedings IEEE Conf. on Computer Vision and Pattern Recognition (CVPR) (2019) 4, 20, 2224 Osman et al.
68. Robinette, K.M., Blackwell, S., Daanen, H., Boehmer, M., Fleming, S., Brill, T., Hoeferlin, D., Burnsides, D.: Civilian American and European Surface Anthropometry Resource (CAESAR) final report. Tech. Rep. AFRL-HE-WP-TR-2002-0169, US Air Force Research Laboratory (2002) 2, 21
69. Romero, J., Tzionas, D., Black, M.J.: Embodied hands: Modeling and capturing hands and bodies together. ACM Transactions on Graphics, (Proc. SIGGRAPH Asia) 36(6), 245:1-245:17 (Nov 2017), http://doi.acm.org/10.1145/3130800. 3130883 4
70. Xu, H., Bazavan, E.G., Zanfir, A., Freeman, W.T., Sukthankar, R., Sminchisescu, C.: GHUM & GHUML: Generative 3D human shape and articulated pose models. In: CVPR. pp. 6184-6193 (2020)

## Claims

1. Method for generating a digital representation of a human body part, based on shape and pose parameters of a human body part model, the method comprising the steps:
- obtaining a template shape of the human body part, the template shape comprising vertices;
- adding a shape-dependent blend shape to vertices of the template shape, based on the shape parameters,
- adding a pose-dependent blend shape of the human body part model to vertices of the template shape, based on the pose parameters,
- applying a blend skinning procedure to the resulting template shape in order to obtain a posed shape; and
- outputting or storing the digital representation, based on the posed shape,
wherein the human body part model has been machine-learned jointly with a full human body model.

2. The method of claim 1, further comprising the step of adding expression dependent blend shapes to vertices of the template shape, based on expression parameters.

3. The method of claim 2, wherein the expression parameters control facial expressions.

4. The method of claim 3, wherein the human body part model is a human head model.

5. The method of claims 1 or 2, wherein the human body part model is a human hand model.

6. The method of claims 1 or 2, wherein the human body part model is a human foot model.

7. The method of one of the preceding claims, wherein the human body part model is automatically separated from a full human body model.

8. The method of one of the preceding claims, wherein the human body part model includes joints of the full human body model that are not joints of the human body part.

9. The method of claim 6, wherein the human body part model is a human foot model and deforms as a function of pose, shape and ground contact.

10. The method of claim 6, wherein the human body part model includes a foot deformation network.

11. The method of one of the preceding claims, wherein the human body part model has been machine-learned jointly with a full human body model, based on a federated dataset of full body and body part scans, in particular hand, head and/or foot scans.

12. The method of one of the preceding claims, wherein pose blend shapes of the full human body model are sparse.

13. The method of one of the preceding claims, wherein each joint of the full human body model only influences a proper subset of the template vertices.

14. Use of a method according to one of the preceding claims in in biomechanics, animation, and the footwear industry, in particular for reconstructing bodies, faces, and hands from images and videos, modeling human interactions, generating 3D clothed humans, or generating humans in scenes, and further to generate priors for fitting models to a wide range of sensory input measurements like motion capture markers or IMUs.

## Patentansprüche

1. Verfahren zur Erzeugung einer digitalen Darstellung eines menschlichen Körperteils auf der Grundlage von Form- und Posenparametern eines Modells eines menschlichen Körperteils, wobei das Verfahren die folgenden Schritte umfasst:
- Ermitteln einer Vorlagenform des menschlichen Körperteils, wobei die Vorlagenform Scheitelpunkte umfasst;
- Hinzufügen einer formabhängigen Blend-Shape zu den Scheitelpunkten der Vorlagenform auf der Grundlage der Formparameter,
- Hinzufügen einer poseabhängigen Blend-Shape des Modells des menschlichen Körperteils zu den Scheitelpunkten der Vorlagenform auf der Grundlage der Posenparameter,
- Anwenden eines Blend-Skinning-Verfahrens auf die resultierende Vorlagenform, um eine in Pose gesetzte Form zu erhalten; und
- Ausgeben oder Speichern der digitalen Darstellung auf der Grundlage der in eine bestimmte Pose gesetzten Form,
wobei das Modell des menschlichen Körperteils gemeinsam mit einem vollständigen menschlichen Körpermodell maschinell gelernt wurde.

2. Verfahren nach Anspruch 1, das ferner den Schritt umfasst, ausdrucksabhängige Blend-Shapes auf der Grundlage von Ausdrucksparametern zu den Scheitelpunkten der Vorlagenform hinzuzufügen.

3. Verfahren nach Anspruch 2, wobei die Ausdrucksparameter Gesichtsausdrücke steuern.

4. Verfahren nach Anspruch 3, wobei das Modell eines menschlichen Körperteils ein Modell eines menschlichen Kopfes ist.

5. Verfahren nach Anspruch 1 oder 2, wobei das Modell eines menschlichen Körperteils ein Modell einer menschlichen Hand ist.

6. Verfahren nach Anspruch 1 oder 2, wobei das Modell eines menschlichen Körperteils ein Modell eines menschlichen Fußes ist.

7. Verfahren nach einem der vorstehenden Ansprüche, wobei das Modell eines menschlichen Körperteils automatisch aus einem vollständigen menschlichen Körpermodell herausgelöst wird.

8. Verfahren nach einem der vorstehenden Ansprüche, wobei das Modell eines menschlichen Körperteils Gelenke des Modells eines gesamten menschlichen Körpers umfasst, die keine Gelenke des menschlichen Körperteils sind.

9. Verfahren nach Anspruch 6, wobei das Modell eines menschlichen Körperteils ein Modell eines menschlichen Fußes ist und sich in Abhängigkeit von Haltung, Form und Bodenkontakt verformt.

10. Verfahren nach Anspruch 6, wobei das Modell eines menschlichen Körperteils ein Fußverformungsnetzwerk umfasst.

11. Verfahren nach einem der vorstehenden Ansprüche, wobei das Modell eines menschlichen Körperteils gemeinsam mit einem vollständigen Körpermodell auf der Grundlage eines föderierten Datensatzes aus vollständigen Körper- und Körperteilscans, insbesondere Hand-, Kopf- und/oder Fußscans, maschinell trainiert wurde.

12. Verfahren nach einem der vorstehenden Ansprüche, wobei die Pose-Blend-Shapes des vollständigen Körpermodells spärlich sind.

13. Verfahren nach einem der vorstehenden Ansprüche, wobei jedes Gelenk des vollständigen Körpermodells nur einen bestimmten Teil der Vorlagen-Scheitelpunkte beeinflusst.

14. Verwendung eines Verfahrens gemäß einem der vorstehenden Ansprüche in der Biomechanik, der Animation und der Schuhindustrie, insbesondere zur Rekonstruktion von Körpern, Gesichtern und Händen aus Bildern und Videos, zur Modellierung menschlicher Interaktionen, zur Erzeugung von 3D-Figuren in Kleidung oder zur Erzeugung von Figuren in Szenen sowie zur Erzeugung von Prioren für die Anpassung von Modellen an ein breites Spektrum sensorischer Eingabemessungen wie Motion-Capture-Marker oder IMUs.

## Revendications

1. Procédé de génération d'une représentation numérique d'une partie du corps humain, sur la base de paramètres de forme et de posture d'un modèle de partie du corps humain, le procédé comprenant les étapes suivantes :
- obtenir une forme modèle de la partie du corps humain, ladite forme modèle comprenant des sommets ;
- ajouter une forme de mélange dépendante de la forme aux sommets de la forme de référence, sur la base des paramètres de forme,
- ajouter une forme de mélange dépendante de la pose du modèle de partie du corps humain aux sommets de la forme de gabarit, en fonction des paramètres de pose,
- appliquer une procédure de « blend skinning » à la forme modèle obtenue afin d'obtenir une forme en pose ; et
- générer ou stocker la représentation numérique, sur la base de la forme en pose,
le modèle de partie du corps humain ayant été appris par apprentissage automatique conjointement avec un modèle complet du corps humain.

2. Procédé selon la revendication 1, comprenant en outre l'étape consistant à ajouter des formes de fusion dépendantes de l'expression aux sommets de la forme du modèle, sur la base de paramètres d'expression.

3. Procédé selon la revendication 2, dans lequel les paramètres d'expression contrôlent les expressions faciales.

4. Procédé selon la revendication 3, dans lequel le modèle de partie du corps humain est un modèle de tête humaine.

5. Procédé selon l'une des revendications 1 ou 2, dans lequel le modèle de partie du corps humain est un modèle de main humaine.

6. Procédé selon l'une des revendications 1 ou 2, dans lequel le modèle de partie du corps humain est un modèle de pied humain.

7. Procédé selon l'une des revendications précédentes, dans lequel le modèle de partie du corps humain est automatiquement séparé d'un modèle de corps humain complet.

8. Procédé selon l'une des revendications précédentes, dans lequel le modèle de partie du corps humain comprend des articulations du modèle de corps humain complet qui ne sont pas des articulations de la partie du corps humain.

9. Procédé selon la revendication 6, dans lequel le modèle de partie du corps humain est un modèle de pied humain et se déforme en fonction de la posture, de la forme et du contact avec le sol.

10. Procédé selon la revendication 6, dans lequel le modèle de partie du corps humain comprend un réseau de déformation du pied.

11. Procédé selon l'une des revendications précédentes, dans lequel le modèle de partie du corps humain a été appris par une machine conjointement avec un modèle de corps humain complet, sur la base d'un ensemble de données fédérées comprenant des scans du corps entier et de parties du corps, en particulier des scans de la main, de la tête et/ou du pied.

12. Procédé selon l'une des revendications précédentes, dans lequel les formes de mélange de poses du modèle de corps humain complet sont clairsemées.

13. Procédé selon l'une des revendications précédentes, dans lequel chaque articulation du modèle du corps humain complet n'influence qu'un sous-ensemble propre des sommets du modèle.

14. Utilisation d'un procédé selon l'une des revendications précédentes en biomécanique, en animation et dans l'industrie de la chaussure, en particulier pour reconstruire des corps, des visages et des mains à partir d'images et de vidéos, modéliser des interactions humaines, générer des personnages humains en 3D vêtus, ou générer des personnages humains dans des scènes, et en outre pour générer des a priori permettant d'ajuster des modèles à un large éventail de mesures d'entrées sensorielles telles que des marqueurs de capture de mouvement ou des IMU.
